(19) Europäisches Patentamt
European Patent Office
Office européen des brevets

(11) **EP 4 679 920 A1**

(12) **EUROPEAN PATENT APPLICATION**
published in accordance with Art. 153(4) EPC

(43) Date of publication:
**14.01.2026 Bulletin 2026/03**

(21) Application number: 24766385.9

(22) Date of filing: **03.03.2024**

(51) International Patent Classification (IPC):
*H04W 72/231* *(2023.01)*

(52) Cooperative Patent Classification (CPC):
**H04W 72/0446; H04W 72/231; H04W 72/232**

(86) International application number:
**PCT/CN2024/079774**

(87) International publication number:
**WO 2024/183670 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **08.03.2023 CN 202310222829**

(71) Applicant: **Apogee Networks, LLC Dallas, TX 75201 (US)**

(72) Inventors:
• WU, Lu
**Shanghai 201206 (CN)**
• ZHANG, Xiaobo
**Shanghai 201206 (CN)**

(74) Representative: **Gunzelmann, Rainer Wuesthoff & Wuesthoff Patentanwälte und Rechtsanwalt PartG mbB Schweigerstraße 2 81541 München (DE)**

(54) **METHOD AND APPARATUS FOR NODE USED FOR WIRELESS COMMUNICATION**

(57)  The present application discloses a method and apparatus for a node used for wireless communication. The method comprises: a first node receiving a second information block, the second information block being used for determining a second resource configuration; receiving target signaling, the target signaling being used for scheduling a target signal on a first cell; receiving a first information block, the first information block being used for determining a first resource configuration; and sending the target signal in a target time domain resource, or forgoing sending the target signal in the target time domain resource, wherein the target time domain resource depends on the second resource configuration, whether the target signal is forgone being sent in the target time domain resource or not depends on whether a first condition is met or not, and when the first condition is met, the target signal is forgone being sent in the target time domain resource. The present application can improve the network side energy efficiency and the transmission reliability.

FIG. 1

## Description

## Technical Field

The present application relates to a transmission method and apparatus in a wireless communication system, in particular to a transmission method and apparatus for wireless signals in a wireless communication system supporting a cellular network.

## Background Art

Network Energy Saving (NES) is of great significance for environmental sustainability, reducing an impact (greenhouse gas emissions) on environment, and saving operating costs. As 5G (the 5th Generation Partnership Project) becomes more prevalent across industries and geographic regions, very high data rates are required to handle more advanced services and applications (such as XR), resulting in increasingly dense networks, and the usage of more antennas, greater bandwidths, and more frequency bands. In order to keep the impact of 5G on the environment within a controllable range, new solutions need to be studied to improve network energy saving. Therefore, the 3GPP RAN #94 meeting approved a study item (SI) of the "Study on network energy savings".

Research work on network energy efficiency was started in NR R (Release) 18, which comprises some key technologies, for example, by dynamically adjusting the transmission patterns of downlink common signals and broadcast signals, including but not limited to adjusting periods, time domain resource positions, etc. of signals/channels such as an SSB (SS/PBCH block), SI (System Information), a paging, and a cell common PDCCH (cell common Physical Downlink Control Channel), to save power consumption on a network side.

## Summary of the Invention

The inventor has found through research that how to further avoid conflicts when determining time domain resources of signals/channels is a key problem.

In view of the above problem, the present application discloses a solution. It should be noted that although the original intention of the present application is for a network energy-saving mode, the present application can also be used in other scenarios, such as a traditional non-energy-saving mode. Furthermore, using a unified design scheme for different scenarios (including but not limited to, the network energy-saving mode and the traditional non-energy-saving mode) can also help to reduce hardware complexity and costs. In case of no conflicts, embodiments and features in the embodiments in any node of the present application can be applied to any other node. In case of no conflicts, the embodiments and features in the embodiments of the present application may be arbitrarily combined with each other.

As one embodiment, the interpretation of terminologies in the present application refers to the definitions of the specification protocol TS36 series of 3GPP.

As one embodiment, the interpretation of the terminologies in the present application refers to the definitions of the specification protocol TS38 series of 3GPP.

As one embodiment, the interpretation of the terminologies in the present application refers to the definitions of the specification protocol TS37 series of 3GPP.

As one embodiment, the interpretation of the terminologies in the present application refers to the definitions of the specification protocol of the Institute of Electrical and Electronics Engineers (IEEE).

The present application discloses a method for a first node used for wireless communication, characterized by comprising:

receiving a second information block, the second information block being used for determining a second resource configuration, and the second resource configuration being used for determining at least one resource; receiving target signaling, the target signaling being used for scheduling a target signal on a first cell; receiving a first information block, the first information block being used for determining a first resource configuration, and the first resource configuration being used for determining at least one resource; and

sending the target signal in a target time domain resource, or forgoing sending the target signal in the target time domain resource,

wherein the target time domain resource depends on the second resource configuration, whether the target signal is forgone being sent in the target time domain resource or not depends on whether a first condition is met or not, when the first condition is met, the target signal is forgone being sent in the target time domain resource, and the first condition comprises: the target time domain resource and the at least one resource determined by the first resource configuration overlap in time domain.

As one embodiment, problems to be solved by the present application comprise: how to determine the target time domain resource.

As one embodiment, the problems to be solved by the present application comprise: how to determine whether to send the target signal or not.

As one embodiment, benefits of the present application comprise: improving the network side energy efficiency.

As one embodiment, the benefits of the present application comprise: increasing the system flexibility, and reducing the signaling overhead.

As one embodiment, the benefits of the present application comprise: having the good backward compatibility and simplifying the system design.

According to one aspect of the present application, it is characterized in that whether the target signal is forgone being sent in the target time domain resource or not depends on whether one condition in a first condition set is met or not, the first condition set comprising a plurality of conditions, and the first condition being one condition in the first condition set; and when there is one condition in the first condition set being met, the target signal is forgone being sent in the target time domain resource.

As one embodiment, the above method determines whether to send the target signal on the target time domain resource or not according to the first condition set, thereby avoiding the conflict of time domain resources and ensuring the reliability of transmission.

According to one aspect of the present application, it is characterized in that both the first resource configuration and the second resource configuration are associated with the first cell.

As one embodiment, the above method adopts a unified solution, which simplifies the system design.

According to one aspect of the present application, it is characterized in that the at least one resource determined by the first resource configuration comprises at least one SSB resource, and the at least one resource determined by the second resource configuration comprises at least one SSB resource.

As one embodiment, the above method has good backward compatibility.

According to one aspect of the present application, it is characterized in that the at least one SSB resource determined by the first resource configuration is on the first cell, and the at least one SSB resource determined by the second resource configuration is on a second cell; and the first cell is different from the second cell.

According to one aspect of the present application, it is characterized in that the at least one SSB resource determined by the first resource configuration is on the second cell, and the at least one SSB resource determined by the second resource configuration is on the first cell; and the first cell is different from the second cell.

As one embodiment, the above method improves the system flexibility and enhances the transmission robustness.

According to one aspect of the present application, it is characterized in that a first PCI is used for generating a PSS and an SSS in the at least one SSB resource determined by the first resource configuration, a second PCI is used for generating a PSS and an SSS in the at least one SSB resource determined by the first resource configuration, and the first PCI is different from the second PCI.

According to one aspect of the present application, it is characterized in that the meaning of "the target time domain resource depends on the second resource configuration" comprises: the target time domain resource is composed of a target available slot group, the target available slot group comprises at least one available slot, and the target available slot group depends on the second resource configuration.

According to one aspect of the present application, it is characterized in that the meaning of "the target time domain resource depends on the second resource configuration" comprises: the target signaling is used for indicating a reference symbol set, the target time domain resource comprises at least one symbol in the reference symbol set that does not belong to a target invalid symbol group, and the target invalid symbol group depends on the second resource configuration.

As one embodiment, the above method establishes multiple associations between the target time domain resource and the second resource configuration, thereby increasing the system flexibility and reliability.

The present application discloses a method for a second node used for wireless communication, characterized by comprising:

sending a second information block, the second information block being used for determining a second resource configuration, and the second resource configuration being used for determining at least one resource; sending target signaling, the target signaling being used for scheduling a target signal on a first cell; sending a first information block, the first information block being used for determining a first resource configuration, and the first resource configuration being used for determining at least one resource; and

receiving the target signal in a target time domain resource, or forgoing receiving the target signal in the target time domain resource,

wherein the target time domain resource depends on the second resource configuration, whether the target signal is forgone being received in the target time domain resource or not depends on whether a first condition is met or not, when the first condition is met, the target signal is forgone being received in the target time domain resource, and the first condition comprises: the target time domain resource and the at least one resource determined by the first resource configuration overlap in time domain.

According to an aspect of the present application, it is characterized in that whether the target signal is forgone being received in the target time domain resource or not depends on whether one condition in a first condition set is met or not, the first condition set comprising a plurality of conditions, and the first condition being one condition in the first condition set; and when there is one condition in the first condition set being met, the target signal is forgone being received in the target time domain resource.

According to one aspect of the present application, it is characterized in that both the first resource configuration and the second resource configuration are associated with the first cell.

According to one aspect of the present application, it is characterized in that the at least one resource determined by the first resource configuration comprises at least one SSB resource, and the at least one resource determined by the second resource configuration comprises at least one SSB resource.

According to one aspect of the present application, it is characterized in that the at least one SSB resource determined by the first resource configuration is on the first cell, and the at least one SSB resource determined by the second resource configuration is on a second cell; and the first cell is different from the second cell.

According to one aspect of the present application, it is characterized in that the at least one SSB resource determined by the first resource configuration is on the second cell, and the at least one SSB resource determined by the second resource configuration is on the first cell; and the first cell is different from the second cell.

According to one aspect of the present application, it is characterized in that a first PCI is used for generating a PSS and an SSS in the at least one SSB resource determined by the first resource configuration, a second PCI is used for generating a PSS and an SSS in the at least one SSB resource determined by the first resource configuration, and the first PCI is different from the second PCI.

According to one aspect of the present application, it is characterized in that the meaning of "the target time domain resource depends on the second resource configuration" comprises: the target time domain resource is composed of a target available slot group, the target available slot group comprises at least one available slot, and the target available slot group depends on the second resource configuration.

According to one aspect of the present application, it is characterized in that the meaning of "the target time domain resource depends on the second resource configuration" comprises: the target signaling is used for indicating a reference symbol set, the target time domain resource comprises at least one symbol in the reference symbol set that does not belong to a target invalid symbol group, and the target invalid symbol group depends on the second resource configuration.

The present application discloses a first node device used for wireless communication, characterized by comprising:

a first receiver receiving a second information block, the second information block being used for determining a second resource configuration, and the second resource configuration being used for determining at least one resource; receiving target signaling, the target signaling being used for scheduling a target signal on a first cell; and receiving a first information block, the first information block being used for determining a first resource configuration, and the first resource configuration being used for determining at least one resource; and
a first transmitter sending the target signal in a target time domain resource, or forgoing sending the target signal in the target time domain resource, wherein the target time domain resource depends on the second resource configuration, whether the target signal is forgone being sent in the target time domain resource or not depends on whether a first condition is met or not, when the first condition is met, the target signal is forgone being sent in the target time domain resource, and the first condition comprises: the target time domain resource and the at least one resource determined by the first resource configuration overlap in time domain.

The present application discloses a second node device used for wireless communication, characterized by comprising:

a second transmitter sending a second information block, the second information block being used for determining a second resource configuration, and the second resource configuration being used for determining at least one resource; sending target signaling, the target signaling being used for scheduling a target signal on a first cell; and sending a first information block, the first information block being used for determining a first resource configuration, and the first resource configuration being used for determining at least one resource; and
a second receiver receiving the target signal in a target time domain resource, or forgoing receiving the target signal in the target time domain resource, wherein the target time domain resource depends on the second resource configuration, whether the target signal is forgone being received in the target time domain resource or not depends on whether a first condition is met or not, when the first condition is met, the target signal is forgone being received in the target time domain resource, and the first condition comprises: the target time domain resource and the at least one resource determined by the first resource configuration overlap in time domain.

As one embodiment, compared with the traditional solution, the present application has the following advantages:

- improving the network side energy efficiency;
- improving the transmission reliability and stability, and increasing the system flexibility;
- reducing the signaling overhead; and
- having the good backward compatibility, and simplifying the signaling design.

## Brief Description of the Drawings

Other features, purposes and advantages of the present application will become more apparent from reading the detailed description of the non-limiting embodiments made with reference to the following drawings:

FIG. 1 shows a flowchart of processing of a first node according to one embodiment of the present application;

FIG. 2 shows a schematic diagram of a network architecture according to one embodiment of the present application;

FIG. 3 shows a schematic diagram of an embodiment of a wireless protocol architecture for a user plane and a control plane according to one embodiment of the present application;

FIG. 4 shows a schematic diagram of a first communication device and a second communication device according to one embodiment of the present application;

FIG. 5 shows a flowchart of wireless transmission according to one embodiment of the present application;

FIG. 6 shows a schematic diagram of a first condition set according to one embodiment of the present application;

FIG. 7 shows a schematic diagram of a first resource configuration and a second resource configuration being associated with a first cell according to one embodiment of the present application;

FIG. 8 shows a schematic diagram of a first resource configuration and a second resource configuration according to one embodiment of the present application;

FIGS. 9A-9B respectively show schematic diagrams of a first resource configuration, a second resource configuration, a first cell, and a second cell according to one embodiment of the present application;

FIG. 10 shows a schematic diagram of a first PCI and a second PCI according to one embodiment of the present application;

FIGS. 11A-11B respectively show schematic diagrams of a target time domain resource depending on a second resource configuration according to one embodiment of the present application;

FIG. 12 shows a structural block diagram of a processing apparatus used in a first node device according to one embodiment of the present application; and

FIG. 13 shows a structural block diagram of a processing apparatus used in a second node device according to one embodiment of the present application.

## Detailed Description of Embodiments

The technical solutions of the present application will be further described in detail below in conjunction with the drawings. It should be noted that, in case of no conflicts, embodiments and features in the embodiments in the present application may be arbitrarily combined with each other.

## Embodiment 1

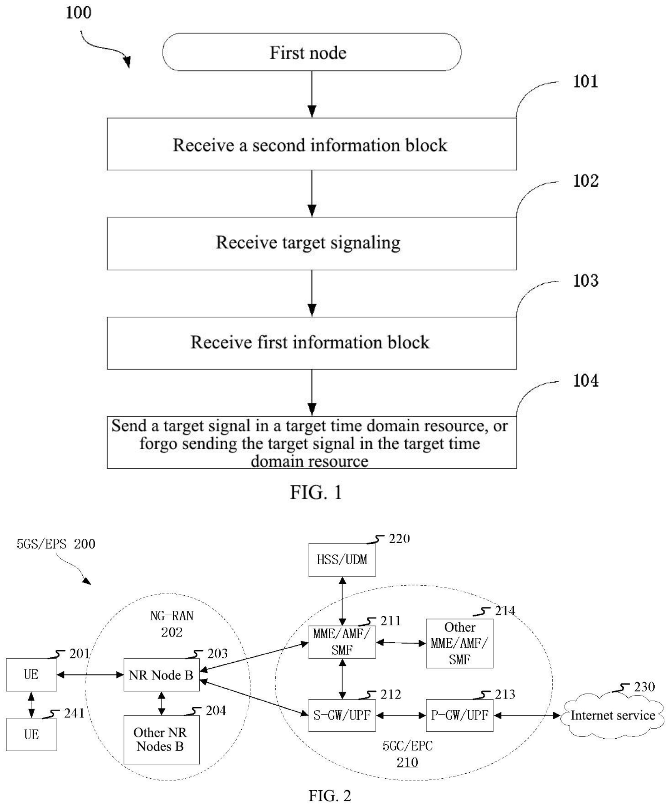

Embodiment 1 illustrates a flowchart of processing of a first node according to one embodiment of the present application, as shown in FIG. 1. In 100 shown in FIG. 1, each block represents one step. In particular, the order of steps in the blocks does not represent a specific time sequence relation among the steps.

In Embodiment 1, the first node in the present application receives a second information block in step 101, the second information block being used for determining a second resource configuration, and the second resource configuration being used for determining at least one resource; receives target signaling in step 102, the target signaling being used for scheduling a target signal on a first cell; receives a first information block in step 103, the first information block being used for determining a first resource configuration, and the first resource configuration being used for determine at least one resource; and sends the target signal in a target time domain resource, or forgoes sending the target signal in the target time domain resource in step 104.

As one embodiment, the second information block is borne by higher layer signaling.

As one embodiment, the second information block is borne by RRC signaling.

As one embodiment, the second information block is borne by MAC CE (Medium Access Control Layer Control Element) signaling.

As one embodiment, the second information block is borne by physical layer signaling.

As one embodiment, the second information block is borne by DCI (Downlink control information) signaling.

As one embodiment, the second information block is jointly borne by the higher layer signaling and the physical layer signaling.

As one embodiment, the second information block is jointly borne by the higher layer signaling and the DCI signaling.

As one embodiment, the second information block is jointly borne by the MAC CE signaling and the DCI signaling.

As one embodiment, the second information block is jointly borne by the RRC signaling and the DCI signaling.

As one embodiment, the second information block is jointly born by the RRC signaling, the MAC CE signaling and the DCI signaling.

As one embodiment, the second information block is borne by an MIB (Master Information Block).

As one embodiment, the second information block is borne by an SIB (System Information Block).

As one embodiment, the second information block is borne by cell-specific signaling.

As one embodiment, the second information block is borne by cell-specific higher layer signaling.

As one embodiment, the second information block is borne by cell-specific DCI signaling.

As one embodiment, the second information block is cell-specific.

As one embodiment, the second information block is borne by UE-group common signaling.

As one embodiment, the second information block is borne by UE-group common higher layer signaling.

As one embodiment, the second information block is borne by UE-group common DCI signaling.

As one embodiment, the second information block is UE-group common.

As one embodiment, the second information block is borne by UE-specific signaling.

As one embodiment, the second information block is borne by UE-specific higher layer signaling.

As one embodiment, the second information block is borne by UE-specific DCI signaling.

As one embodiment, the second information block is UE-specific.

As one embodiment, the meaning of the UE-specific comprises: UE-dedicated.

As one embodiment, the second information block is used for activating the second resource configuration.

As one embodiment, the second information block is used for indicating the second resource configuration.

As one embodiment, the second information block explicitly indicates the second resource configuration.

As one embodiment, the second information block implicitly indicates the second resource configuration.

As one embodiment, the second information block directly indicates the second resource configuration.

As one embodiment, the second information block indirectly indicates the second resource configuration.

As one embodiment, the second information block is used for indicating an index of the second resource configuration.

As one embodiment, the second information block is used for indicating an identifier of the second resource configuration.

As one embodiment, the second information block is used for indicating a serial number of the second resource configuration.

As one embodiment, the at least one resource determined by the second resource configuration comprises at least one slot, and the at least one resource determined by the first resource configuration comprises at least one slot.

As one embodiment, the at least one resource determined by the second resource configuration comprises at least one RE (Resource Element), and the at least one resource determined by the first resource configuration comprises at least one RE.

As one embodiment, the at least one resource determined by the second resource configuration comprises at least one symbol, and the at least one resource determined by the first resource configuration comprises at least one symbol.

As one embodiment, types of one symbol comprise uplink (UL), downlink (DL), and flexible.

As one embodiment, the type of one symbol comprises at least one of uplink, downlink, or flexible.

As one embodiment, the type of one symbol comprises uplink, downlink, flexible, and invalid.

As one embodiment, the type of one symbol type comprises at least one of uplink, downlink, flexible, or invalid.

As one embodiment, the at least one resource determined by the second resource configuration comprises at least one DL symbol, and the at least one resource determined by the first resource configuration comprises at least one DL symbol.

As one embodiment, the at least one resource determined by the second resource configuration comprises at least one invalid symbol, and the at least one resource determined by the first resource configuration comprises at least one invalid symbol.

As one embodiment, the at least one resource determined by the second resource configuration comprises at least one SSB resource, and the at least one resource determined by the first resource configuration comprises at least one SSB resource.

As one embodiment, the first resource configuration is used for indicating the SSB resource, and the second resource configuration is used for indicating the SSB resource.

As one embodiment, the first resource configuration is used for indicating a position of the SSB resource in time domain, and the second resource configuration is used for indicating the position of the SSB resource in time domain.

As one embodiment, the first resource configuration is used for indicating a slot to which the SSB resource belongs, and the second resource configuration is used for indicating the slot to which the SSB resource belongs.

As one embodiment, the first resource configuration is used for indicating a symbol occupied by the SSB resource in a slot, and the second resource configuration is used for indicating the symbol occupied by the SSB resource in the slot.

As one embodiment, the first resource configuration is used for indicating a start position of the symbol occupied by the SSB resource in the slot, and the second resource configuration is used for indicating the start position of the symbol occupied by the SSB resource in the slot.

As one embodiment, the at least one resource determined by the first resource configuration comprises the SSB resource indicated by the first resource configuration, and the at least one resource determined by the second resource configuration comprises the SSB resource indicated by the second resource configuration.

As one embodiment, the at least one resource determined by the first resource configuration comprises the symbol occupied by the SSB resources indicated by the first resource configuration, and the at least one resource determined by the second resource configuration comprises the symbol occupied by the SSB resources indicated by the second resource configuration.

As one embodiment, the at least one resource determined by the first resource configuration comprises the slot to which the SSB resource indicated by the first resource configuration belongs, and the at least one resource determined by the second resource configuration comprises the slot to which the SSB resource indicated by the second resource configuration belongs.

As one embodiment, the first resource configuration is used for indicate an SSB period, and the second resource configuration is used for indicating the SSB period.

As one sub-embodiment of the above embodiment, the at least one resource determined by the first resource configuration comprises at least one SSB resource taking the SSB period indicated by the first resource configuration as a period, and the at least one resource determined by the second resource configuration comprises at least one SSB resource taking the SSB period indicated by the second resource configuration as the period.

As one sub-embodiment of the above embodiment, the at least one resource determined by the first resource configuration comprises the symbol occupied by at least one SSB resource taking the SSB period indicated by the first resource configuration as the period, and the at least one resource determined by the second resource configuration comprises the symbol occupied by at least one SSB resource taking the SSB period indicated by the second resource configuration as the period.

As one sub-embodiment of the above embodiment, the at least one resource determined by the first resource configuration comprises the slot to which at least one SSB resource taking the SSB period indicated by the first resource configuration as the period belongs, and the at least one resource determined by the second resource configuration comprises the slot to which at least one SSB resource taking the SSB period indicated by the second resource configuration as the period belongs.

As one embodiment, the first resource configuration is used for indicating at least one of a UL symbol or the DL symbol, and the second resource configuration is used for indicating at least one of the UL symbol or the DL symbol.

As one sub-embodiment of the above embodiment, the at least one resource determined by the first resource configuration comprises the DL symbol indicated by the first resource configuration, and the at least one resource determined by the second resource configuration comprises the DL symbol indicated by the second resource configuration.

As one sub-embodiment of the above embodiment, the at least one resource determined by the first resource configuration comprises the slot to which the DL symbol indicated by the first resource configuration belongs, and the at least one resource determined by the second resource configuration comprises the slot to which the DL symbol indicated by the second resource configuration belongs.

As one sub-embodiment of the above embodiment, the first resource configuration is used for indicating the DL symbol, and the at least one resource determined by the first resource configuration comprises the DL symbol indicated by the first resource configuration.

As one sub-embodiment of the above embodiment, the second resource configuration is used for indicating the DL symbol, and the at least one resource determined by the second resource configuration comprises the DL symbol indicated by the second resource configuration.

As one sub-embodiment of the above embodiment, the first resource configuration is used for indicating the UL symbol, and the at least one resource determined by the first resource configuration comprises at least one DL symbol other than the UL symbol indicated by the first resource configuration.

As one sub-embodiment of the above embodiment, the first resource configuration is used for indicating the UL symbol, and the at least one resource determined by the first resource configuration comprises the slot to which at least one DL symbol other than the UL symbol indicated by the first resource configuration belongs.

As one sub-embodiment of the above embodiment, the second resource configuration is used for indicating the UL symbol, and the at least one resource determined by the second resource configuration comprises at least one DL symbol other than the UL symbol indicated by the second resource configuration.

As one sub-embodiment of the above embodiment, the second resource configuration is used for indicating the UL symbol, and the at least one resource determined by the second resource configuration comprises the slot to which at least one DL symbol other than the UL symbol indicated by the second resource configuration belongs.

As one embodiment, a name of the first resource configuration comprises tdd-UL-DL-ConfigurationCommon or tdd-UL-DL-ConfigurationDedicated.

As one embodiment, the name of the second resource configuration comprises tdd-UL-DL-ConfigurationCommon or tdd-UL-DL-ConfigurationDedicated.

As one embodiment, the first resource configuration is used for indicating the invalid symbol, and the second resource configuration is used for indicating the invalid symbol.

As one sub-embodiment of the above embodiment, the at least one resource determined by the first resource configuration comprises the invalid symbol indicated by the first resource configuration.

As one sub-embodiment of the above embodiment, the at least one resource determined by the second resource configuration comprises the invalid symbol indicated by the second resource configuration.

As one embodiment, the invalid symbol indicated by the first resource configuration comprises a symbol indicated by numberOfInvalidSymbolsForDL-UL-Switching.

As one embodiment, the invalid symbol indicated by the second resource configuration comprises a symbol indicated by numberOfInvalidSymbolsForDL-UL-Switching.

As one embodiment, the invalid symbol indicated by the first resource configuration comprises a symbol indicated by invalidSymbolPattern.

As one embodiment, the invalid symbol indicated by the second resource configuration comprises a symbol indicated by invalidSymbolPattern.

As one embodiment, the invalid symbol indicated by the first resource configuration comprises a symbol of one CORESET (Control resource set) indicated for use in a Type0-PDCCH CSS (Common Search Space) set.

As one embodiment, the invalid symbol indicated by the second resource configuration comprises a symbol of one CORESET (Control resource set) indicated for use in the Type0-PDCCH CSS (Common Search Space) set.

As one embodiment, the first information block is borne by the higher layer signaling.

As one embodiment, the first information block is borne by the RRC signaling.

As one embodiment, the first information block is borne by the MAC CE signaling.

As one embodiment, the first information block is borne by the physical layer signaling.

As one embodiment, the first information block is borne by the DCI signaling.

As one embodiment, the first information block is jointly borne by the higher layer signaling and the physical layer signaling.

As one embodiment, the first information block is jointly borne by the higher layer signaling and the DCI signaling.

As one embodiment, the first information block is jointly borne by the MAC CE signaling and the DCI signaling.

As one embodiment, the first information block is jointly borne by the RRC signaling and the DCI signaling.

As one embodiment, the first information block is jointly borne by the RRC signaling, the MAC CE signaling and the DCI signaling.

As one embodiment, the first information block is borne by the cell-specific signaling.

As one embodiment, the first information block is borne by the cell-specific higher layer signaling.

As one embodiment, the first information block is borne by the cell-specific DCI signaling.

As one embodiment, the first information block is cell-specific.

As one embodiment, the first information block is borne by the UE-group common signaling.

As one embodiment, the first information block is borne by the UE-group common higher layer signaling.

As one embodiment, the first information block is borne by the UE-group common DCI signaling.

As one embodiment, the first information block is UE-group common.

As one embodiment, the first information block is borne by the UE-specific signaling.

As one embodiment, the first information block is borne by the UE-specific higher layer signaling.

As one embodiment, the first information block is borne by the UE-specific DCI signaling.

As one embodiment, the first information block is UE-specific.

As one embodiment, the first information block is used for activating the first resource configuration.

As one embodiment, the first information block is used for indicating the first resource configuration.

As one embodiment, the first information block explicitly indicates the first resource configuration.

As one embodiment, the first information block implicitly indicates the first resource configuration.

As one embodiment, the first information block directly indicates the first resource configuration.

As one embodiment, the first information block indirectly indicates the first resource configuration.

As one embodiment, the first information block is used for indicating the index of the first resource configuration.

As one embodiment, the first information block is used for indicating the identifier of the first resource configuration.

As one embodiment, the first information block is used for indicating the serial number of the first resource configuration.

As one embodiment, the second information block and the first information block are respectively borne by different signaling.

As one embodiment, the second information block is borne by the higher layer signaling, and the first information block is borne by the physical layer signaling.

As one embodiment, the second information block is borne by the MAC CE signaling, and the first information block is borne by the physical layer signaling.

As one embodiment, the second information block is borne by the RRC signaling, and the first information block is borne by the physical layer signaling.

As one embodiment, the second information block is borne by the RRC signaling, and the first information block is borne by the DCI signaling.

As one embodiment, the second information block is borne by the RRC signaling, and the first information block is borne by the MAC CE signaling.

As one embodiment, the second information block and the first information block are respectively borne by different MAC CE signaling.

As one embodiment, the second information block and the first information block are respectively borne by different physical layer signaling.

As one embodiment, the second information block and the first information block are respectively borne by different DCI signaling.

As one embodiment, the first information block indicates the first cell.

As one embodiment, the first information block indicates the SSB resource on the first cell.

As one embodiment, the first information block indicates that the SSB resource on the first cell is activated.

As one embodiment, the first information block indicates that the SSB resource on the first cell is transmitted.

As one embodiment, the first information block indicates a handover or change of an SSB resource configuration.

As one embodiment, the first information block indicates a change of a transmitted SSB resource.

As one embodiment, the first information block indicates the change of the number of transmitted SSB resources.

As one embodiment, the first information block indicates that the number of transmitted SSB resources is reduced.

As one embodiment, the first information block indicates that the number of transmitted SSB resources is increased.

As one embodiment, the first information block indicates the change in a position of the transmitted SSB resource in time domain.

As one embodiment, the first information block indicates the handover or change of the SSB resource configuration on the first cell.

As one embodiment, the first information block indicates the handover or change of the transmitted SSB resource on the first cell.

As one embodiment, the first information block indicates the SSB resource used for synchronization of the first cell.

As one embodiment, the first information block indicates that the SSB resource used for synchronization of the first cell is activated.

As one embodiment, the first information block indicates that the SSB resource used for synchronization of the first cell is transmitted.

As one embodiment, the first information block indicates the handover or change of the SSB resource used for synchronization of the first cell.

As one embodiment, the SSB resource is an SS/PBCH (Synchronization Signal/Physical Broadcast Channel) block resource.

As one embodiment, the SS/PBCH block comprises at least one of a PSS (Primary Synchronization Signal), an SSS (Secondary Synchronization Signal), and a PBCH (Physical Broadcast Channel).

As one embodiment, the SS/PBCH block comprises at least the PSS amongst the PSS, the SSS, and the PBCH.

As one embodiment, the SS/PBCH block comprises at least the PSS and the SSS amongst the PSS, the SSS, and the PBCH.

As one embodiment, the SS/PBCH block comprises the PSS, the SSS, and the PBCH.

As one embodiment, the SS/PBCH block occupies at least one symbol in time domain.

As one embodiment, the SS/PBCH block occupies 4 symbols in time domain.

As one embodiment, the symbol is a single-carrier symbol.

As one embodiment, the symbol is a multi-carrier symbol.

As one embodiment, the multi-carrier symbol is an OFDM (Orthogonal Frequency Division Multiplexing) symbol.

As one embodiment, the multi-carrier symbol is obtained by an output of a transform precoding undergoing the generation of the OFDM symbol.

As one embodiment, the multi-carrier symbol is an SC-FDMA (Single Carrier-Frequency Division Multiple Access) symbol.

As one embodiment, the multi-carrier symbol is a DFT-S-OFDM (Discrete Fourier Transform Spread OFDM) symbol.

As one embodiment, the multi-carrier symbol is an FBMC (Filter Bank Multi Carrier) symbol.

As one embodiment, the multi-carrier symbol comprises a CP (Cyclic Prefix).

As one embodiment, the target signaling is the higher layer signaling.

As one embodiment, the target signaling comprises the RRC signaling.

As one embodiment, the target signaling is the RRC signaling.

As one embodiment, the target signaling comprises information in at least one field in one RRC IE.

As one embodiment, the target signaling comprises IE ConfiguredGrantConfig.

As one embodiment, the target signaling is IE ConfiguredGrantConfig.

As one embodiment, the target signaling comprises rrc-ConfiguredUplinkGrant.

As one embodiment, the target signaling is RAR (Random Access Response) uplink grant (UL grant) signaling.

As one embodiment, the target signaling is fallback RAR uplink grant (UL grant) signaling.

As one embodiment, the target signaling comprises the physical layer signaling.

As one embodiment, the target signaling comprises the DCI signaling.

As one embodiment, the target signaling is the DCI signaling.

As one embodiment, the target signaling comprises one or more DCI fields in DCI.

As one embodiment, the target signaling is the DCI signaling, and a CRC (Cyclic Redundancy Check) of the target signaling is scrambled by a C (Cell)-RNTI (Radio Network Temporary Identifier).

As one embodiment, the target signaling is the DCI signaling, and the CRC of the target signaling is scrambled by an MCS (Modulation and Coding Scheme)-C-RNTI.

As one embodiment, the target signaling is the DCI signaling, and the CRC of the target signaling is scrambled by a CS (Configured Scheduling)-RNTI.

As one embodiment, the target signaling is the DCI signaling, and a format of the target signaling is DCI format 0_0.

As one embodiment, the target signaling is the DCI signaling, and the format of the target signaling is DCI format 0_1.

As one embodiment, the target signaling is the DCI signaling, and the format of the target signaling is DCI format 0_2.

As one embodiment, the target signaling is the DCI signaling, and the format of the target signaling is DCI format 0_0 or 0_1.

As one embodiment, the target signaling is the DCI signaling, and the format of the target signaling is DCI format 0_1 or 0_2.

As one embodiment, the target signaling is the DCI signaling, and the format of the target signaling is DCI format 0_0 or 0_1 or 0_2.

As one embodiment, the target signaling is the DCI signaling, and the format of the target signaling is DCI format 0_0 scrambled by a TC-RNTI.

As one embodiment, the target signaling indicates that the first node sends the target signal.

As one embodiment, the target signaling indicates that the first node allows to send the target signal.

As one embodiment, the target signaling indicates that the first node sends the target signal on the first cell.

As one embodiment, the target signaling comprises a TDRA (Time domain resource assignment) field.

As one embodiment, the target signaling is the DCI signaling, and the TDRA field of the target signaling is used for determining a time domain resource of the target signal.

As one embodiment, a value of the TDRA field of the target signaling indicates a row index of a resource assignment table.

As one embodiment, the value of the TDRA field of the target signaling is m, and the row index of the resource assignment table is m+1.

As one embodiment, the target signaling comprises a PUSCH time resource allocation field.

As one embodiment, the target signaling is the RAR uplink grant (UL grant) signaling or the fallback RAR uplink grant (UL grant) signaling, and the PUSCH time resource allocation field of the target signaling is used for determining the time domain resource of the target signal.

As one embodiment, the value of the PUSCH time resource allocation field of the target signaling indicates the row index of the resource assignment table.

As one embodiment, the value of the PUSCH time resource allocation field of the target signaling is m, and the row index of the resource assignment table is m+1.

As one embodiment, the row index of the resource assignment table is used for determining time domain resource assignment parameters of the target signal. The time domain resource assignment parameters comprise: a slot offset $K_2$, an SLIV (Start and length indicator value) or a start symbol S and an assignment length L, a PUSCH mapping type, the number of slots used for TBS (Transport Block Size) determination, and the number of repetitions.

As one embodiment, for the specific definition of the time domain resource assignment parameters, refer to Chapter 6.1 of 3GPP TS 38.214.

As one embodiment, for the specific definition of the TDRA field, refer to Chapter 7.3.1 of 3GPP TS 38.212.

As one embodiment, for the specific definition of the PUSCH time resource allocation field, refer to Chapter 8.2 of 3GPP TS 38.213.

As one embodiment, for the resource assignment table, refer to Chapter 6.1.2.1 of 3GPP TS 38.214 for details.

As one embodiment, the target signal is a PUSCH transmission.

As one embodiment, the target signal is the PUSCH transmission, and the target signal comprises one TB (Transport Block).

As one embodiment, the target signal is the PUSCH transmission, and the target signal comprises a CSI report.

As one embodiment, the target signal is the PUSCH transmission, and the target signal comprises one TB and does not comprise the CSI report.

As one embodiment, the target signal is the PUSCH transmission, and the target signal comprises one TB and comprises the CSI report.

As one embodiment, the target signal is the PUSCH transmission, and the target signal comprises the CSI report and does not comprise the TB.

As one embodiment, the target signal is the PUSCH transmission of a PUSCH repetition type A.

As one embodiment, the target signal is the PUSCH transmission of a PUSCH repetition type B.

As one embodiment, the target signal is the PUSCH transmission of TB processing over multiple slots.

As one embodiment, for the specific definition of the PUSCH repetition type A, refer to Chapter 6 of 3GPP TS 38.214.

As one embodiment, for the specific definition of the PUSCH repetition type B, refer to Chapter 6 of 3GPP TS 38.214.

As one embodiment, for the specific definition of the TB processing over multiple slots, refer to Chapter 6 of 3GPP TS 38.214.

As one embodiment, the target signal is the PUSCH transmission, and the PUSCH mapping type of the target signal is one of a Type A or a Type B.

As one embodiment, for the specific definition of the PUSCH mapping type, refer to Chapter 6 of 3GPP TS 38.214.

As one embodiment, the target signal is the PUSCH transmission of the PUSCH repetition type A, and the PUSCH mapping type of the target signal is one of the Type A or the Type B.

As one embodiment, the target signal is the PUSCH transmission of the PUSCH repetition type A, and the PUSCH mapping type of the target signal is the Type A.

As one embodiment, the target signal is the PUSCH transmission of the PUSCH repetition type A, and the PUSCH mapping type of the target signal is the Type B.

As one embodiment, the target signal is the PUSCH transmission of the PUSCH repetition type B, and the PUSCH mapping type of the target signal is the Type B.

As one embodiment, the target signal is the PUSCH transmission of the TB processing over multiple slots, and the PUSCH mapping type of the target signal is one of the Type A or the Type B.

As one embodiment, the target signal is the PUSCH transmission of the TB processing over multiple slots, and the PUSCH mapping type of the target signal is the Type A.

As one embodiment, the target signal is the PUSCH transmission of the TB processing over multiple slots, and the PUSCH mapping type of the target signal is the Type B.

Typically, the second information block is received earlier than the target signaling.

Typically, the second information block is received earlier than the first information block.

As one embodiment, the target signaling is received not later than the first information block.

As one embodiment, the target signaling is received earlier than the first information block.

As one embodiment, the target time domain resource is not earlier than the first information block.

As one embodiment, the target time domain resource is later than the first information block.

As one embodiment, the target time domain resource comprises the time domain resource of the target signal.

As one embodiment, the target time domain resource is the time domain resource of the target signal.

As one embodiment, the target signaling is received not later than a first symbol.

As one embodiment, the target signaling is received earlier than the first symbol.

As one embodiment, the target time domain resource is not earlier than the first symbol.

As one embodiment, the target time domain resource is later than the first symbol.

As one embodiment, the first symbol depends on the first information block.

As one embodiment, the first information block is used for indicating the first symbol.

As one embodiment, the first symbol depends on a symbol occupied by the first information block.

As one embodiment, the first symbol is one symbol amongst symbols occupied by the first information block.

As one embodiment, the first symbol is the first one of symbols occupied by the first information block.

As one embodiment, the first symbol is the last one of symbols occupied by the first information block.

As one embodiment, the first symbol is one symbol behind the last one of symbols occupied by the first information block.

As one embodiment, the first symbol is one symbol behind a target symbol.

As one embodiment, the target symbol is the last one of symbols occupied by HARQ-ACK information sent for the first information block.

As one embodiment, the HARQ-ACK information sent for the first information block is borne by a PUCCH (Physical Uplink Control Channel).

As one embodiment, the HARQ-ACK information sent for the first information block is borne by a PUSCH.

As one embodiment, the first symbol is one symbol at least L symbols behind the target symbol.

As one embodiment, the first symbol is one symbol L symbols behind the target symbol.

As one embodiment, the first symbol is one symbol which is at least L symbols behind the target symbol and is in the first one of slots.

As one embodiment, the first symbol is the start symbol which is at least L symbols behind the target symbol and is in the first one of slots.

As one embodiment, the first symbol is a symbol previous to the start symbol which is at least L symbols behind the target symbol and is in the first one of slots.

As one embodiment, L is a non-negative integer.

As one embodiment, L is a positive integer.

As one embodiment, L is configurable.

As one embodiment, L is configured by a higher layer parameter.

As one embodiment, L is configured by an RRC parameter.

As one embodiment, L is indicated by the first information block.

As one embodiment, the first symbol is a valid symbol of the first resource configuration.

As one embodiment, the first symbol is a start valid symbol of the first resource configuration.

As one embodiment, the first cell is an SCell (Secondary Cell).

As one embodiment, the first cell is an SSB-less SCell.

As one embodiment, the first cell is an SpCell (Special Cell).

As one embodiment, the first cell is a PCell (Primary Cell).

As one embodiment, the first cell is a PSCell (Primary Secondary Cell Group Cell).

As one embodiment, the first cell is one serving cell.

As one embodiment, the first cell is the serving cell of a first node device.

As one embodiment, the SSB resource indicated by only one of the first resource configuration and the second resource configuration is on the first cell.

As one embodiment, only the SSB resource indicated by the first resource configuration is on the first cell.

As one embodiment, only the SSB resource indicated by the second resource configuration is on the first cell.

As one embodiment, all SSB resources indicated by the first resource configuration and the second resource configuration are on the first cell.

As one embodiment, the meaning of "the target time domain resource depends on the second resource configuration" comprises: the target time domain resource depends only on the second resource configuration.

As one embodiment, the meaning of "the target time domain resource depends on the second resource configuration" comprises: the target time domain resource depends on the at least one resource determined by the second resource configuration.

As one embodiment, the meaning of "the target time domain resource depends on the second resource configuration" comprises: the target time domain resource depends on one or more resources amongst the at least one resource determined by the second resource configuration.

As one embodiment, the meaning of "the target time domain resource depends on the second resource configuration" comprises: the target time domain resource depends on part of or all resources amongst the at least one resource determined by the second resource configuration.

As one embodiment, the meaning of "the target time domain resource depends on the second resource configuration" comprises: the target time domain resource depends on all resources amongst the at least one resource determined by the second resource configuration.

As one embodiment, the meaning of "the target time domain resource depends on the second resource configuration" comprises: the target time domain resource depends on the SSB resource indicated by the second resource configuration.

As one embodiment, the meaning of "the target time domain resource depends on the second resource configuration" comprises: the target time domain resource depends on the DL symbol indicated by the second resource configuration.

As one embodiment, the meaning of "the target time domain resource depends on the second resource configuration" comprises: the target time domain resource depends on the invalid symbol indicated by the second resource configuration.

As one embodiment, the meaning of "the target time domain resource depends on the second resource configuration" comprises: the target time domain resource and the at least one resource determined by the second resource configuration do not overlap in time domain.

As one embodiment, the meaning of "the target time domain resource depends on the second resource configuration" comprises: the target time domain resource is orthogonal to the at least one resource determined by the second resource configuration in time domain.

As one embodiment, the meaning of "the target time domain resource depends on the second resource configuration" comprises: the target time domain resource and any resource amongst the at least one resource determined by the second resource configuration do not overlap in time domain.

As one embodiment, the meaning of "the target time domain resource depends on the second resource configuration" comprises: the target time domain resource is orthogonal to any resource amongst the at least one resource determined by the second resource configuration in time domain.

As one embodiment, the meaning of "the target time domain resource depends on the second resource configuration" comprises: a symbol occupied by the target time domain resource and the at least one resource determined by the second resource configuration do not overlap in time domain.

As one embodiment, the meaning of "the target time domain resource depends on the second resource configuration" comprises: the symbol occupied by the target time domain resource is orthogonal to the at least one resource determined by the second resource configuration in time domain.

As one embodiment, the meaning of "the target time domain resource depends on the second resource configuration" comprises: the symbol occupied by the target time domain resource and any resource amongst the at least one resource determined by the second resource configuration do not overlap in time domain.

As one embodiment, the meaning of "the target time domain resource depends on the second resource configuration" comprises: the symbol occupied by the target time domain resource is orthogonal to any resource amongst the at least one resource determined by the second resource configuration in time domain.

As one embodiment, only when a first condition is met, the target signal is forgone being sent in the target time domain resource; and the first condition comprises: the target time domain resource and the at least one resource determined by the first resource configuration overlap in time domain.

As one embodiment, when the first condition is not met, the target signal is sent on the target time domain resource.

As one embodiment, only when the first condition is not met, the target signal is sent on the target time domain resource.

As one embodiment, the first condition comprises: the target time domain resource and the at least one resource determined by the first resource configuration overlap in time domain.

As one embodiment, the first condition comprises: the target time domain resource and one or more resources amongst the at least one resource determined by the first resource configuration overlap in time domain.

As one embodiment, the first condition comprises: the target time domain resource and part of or all resources amongst the at least one resource determined by the first resource configuration overlap in time domain.

As one embodiment, the first condition comprises: the target time domain resource and all resources amongst the at least one resource determined by the first resource configuration overlap in time domain.

As one embodiment, the first condition comprises: the target time domain resource and any resource amongst at least one resource determined by the first resource configuration overlap in time domain.

As one embodiment, the first condition comprises: the target time domain resource and the at least one resource determined by the first resource configuration are the same in time domain.

As one embodiment, the first condition comprises: the target time domain resource and any resource amongst the at least one resource determined by the first resource configuration are the same in time domain.

As one embodiment, the first condition comprises: the symbol occupied by the target time domain resource and the at least one resource determined by the first resource configuration overlap in time domain.

As one embodiment, the first condition comprises: the symbol occupied by the target time domain resource and one or more resources amongst the at least one resource determined by the first resource configuration overlap in time domain.

As one embodiment, the first condition comprises: the symbol occupied by the target time domain resource and part of or all resources amongst the at least one resource determined by the first resource configuration overlap in time domain.

As one embodiment, the first condition comprises: the symbol occupied by the target time domain resource and all resources amongst the at least one resource determined by the first resource configuration overlap in time domain.

As one embodiment, the first condition comprises: the symbol occupied by the target time domain resource and any resource amongst the at least one resource determined by the first resource configuration overlap in time domain.

**Embodiment 2**

Embodiment 2 illustrates a schematic diagram of a network architecture according to one embodiment of the present application, as shown in FIG. 2.

FIG. 2 illustrates a network architecture 200 of LTE (Long-Term Evolution), LTE-A (Long-Term Evolution Advanced), and future 5G systems. The network architecture 200 of the LTE, LTE-A and future 5G systems is referred to as an EPS (Evolved Packet System) 200. The 5G NR or LTE network architecture 200 may be referred to as a 5GS (5G System)/EPS (Evolved Packet System) 200 or some other suitable terminologies. The 5GS/EPS 200 may comprise one or more pieces of UE (User Equipment) 201, one piece of UE241 performing sidelink communication with UE201, an NG-RAN (Next Generation Radio Access Network) 202, a 5GC (5G CoreNetwork)/EPC (Evolved Packet Core) 210, an HSS (Home Subscriber Server)/UDM (Unified Data Management) 220, and an Internet service 230. The 5GS/EPS200 may be interconnected with other access networks, but these entities/interfaces are not shown for simplicity. As shown in FIG. 2, the 5GS/EPS200 provides a packet switching service, but those skilled in the art will readily appreciate that various concepts presented throughout the present application may be extended to networks providing a circuit switching service. The NG-RAN202 comprises an NR (New Radio) Node B (gNB) 203 and other gNBs 204. The gNB203 provides user and control plane protocol termination toward the UE201. The gNB203 may be connected to other gNBs 204 via an Xn interface (e.g., backhaul). The gNB203 may also be referred to as a base station, a base transceiver station, a radio base station, a radio transceiving device, a transceiving device function, a basic service set (BSS), an extended service set (ESS), a TRP (Transmitter Receiver Point), or some other suitable terminologies. The gNB203 provides an access point to the 5GC/EPC210 for the UE201. Examples of the UE201 comprise a cellular phone, a smartphone, a session initiation protocol (SIP) phone, a laptop, a personal digital assistant (PDA), a satellite radio, a global positioning system, a multimedia apparatus, a video apparatus, a digital audio player (e.g., an MP3 player), a camera, a game console, a drone, an aircraft, a narrowband physical network device, a machine type communication device, a land vehicle, an automobile, a wearable device, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC210 through an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted through the S-GW/UPF212, and the S-GW/LTPF212 is itself connected to the P-GW/UPF213. The P-GW provides UE IP address assignment and other functions. The P-GW/UPF213 is connected to the Internet service 230. The Internet service 230 comprises operator-corresponding Internet protocol services, which may specifically comprise the Internet, an intranet, an IMS (IP Multimedia Subsystem) and a packet switching service.

As one embodiment, a first node in the present application comprises the UE201.

As one embodiment, a first node in the present application comprises the UE241.

As one embodiment, the second node in the present application comprises the gNB203.

### Embodiment 3

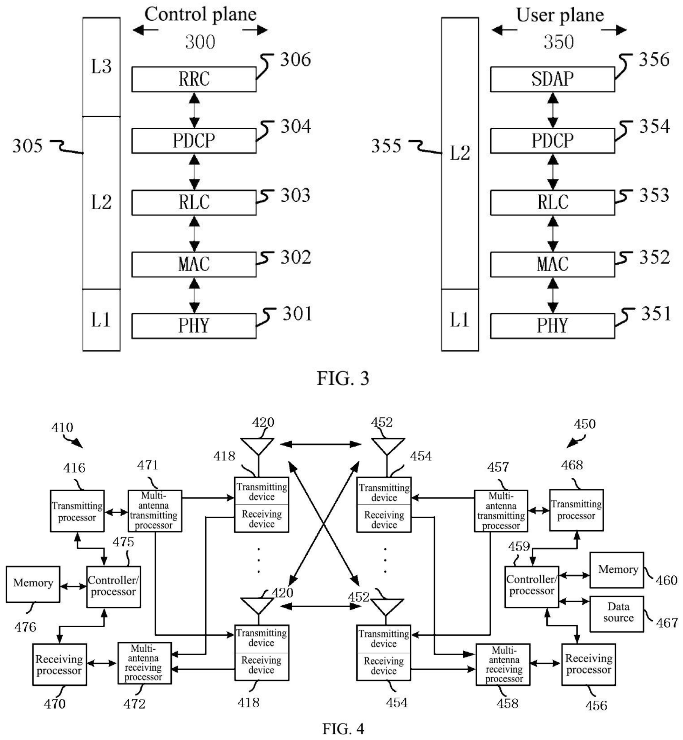

Embodiment 3 illustrates a schematic diagram of an embodiment of a wireless protocol architecture for a user plane and a control plane according to one embodiment of the present application, as shown in FIG. 3.

Embodiment 3 shows a schematic diagram of an embodiment of one wireless protocol architecture for the user plane and the control plane according to the present application, as shown in FIG. 3. FIG. 3 is a schematic diagram illustrating an embodiment of a radio protocol architecture for a user plane 350 and a control plane 300. FIG. 3 shows the radio protocol architecture of the control plane 300 used between a first communication node device (UE, a gNB, or an RSU in V2X) and a second communication node device (the gNB, the UE, or the RSU in V2X), or between two pieces of UE using three layers: a Layer 1, a Layer 2, and a Layer 3. The Layer 1 (L1 layer) is the lowest layer and implements various PHY (physical layer) signal processing functions. The L1 layer will be referred to as a PHY301 herein. The Layer 2 (L2 layer) 305 is above the PHY301, and is responsible for a link between the first communication node device and the second communication node device, or between two pieces of UE. The L2 layer 305 comprises an MAC (Medium Access Control) sublayer 302, an RLC (Radio Link Control) sublayer 303, and a PDCP (Packet Data Convergence Protocol) sublayer 304, these sublayers terminating at the second communication node device. The PDCP sublayer 304 provides multiplexing between different radio bearers and logical channels. The PDCP sublayer 304 also provides security by encrypting data packets, and provides handover support for the first communication node device between the second communication node devices. The RLC sublayer 303 provides segmentation and reassembly of upper-layer data packets, retransmission of lost data packets, and reordering of data packets to compensate for out-of-order reception due to an HARQ. The MAC sublayer 302 provides multiplexing between logical and transmission channels. The MAC sublayer 302 is also responsible for assigning various radio resources (e.g., resource blocks) in one cell between the first communication node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers using RRC signaling between the second communication node device and the first communication node device. The radio protocol architecture for the user plane 350 comprises the Layer 1 (L1 layer) and the Layer 2 (L2 layer). The radio protocol architecture for the first communication node device and the second communication node device in the user plane 350 is substantially the same as the corresponding layers and sublayers in the control plane 300 as for a physical layer 351, a PDCP sublayer 354 in an L2 layer 355, an RLC sublayer 353 in the L2 layer 355, and an MAC sublayer 352 in the L2 layer 355, but the PDCP sublayer 354 also provides header compression for upper-layer data packets to reduce the wireless transmission overhead. The L2 layer 355 in the user plane 350 also comprises an SDAP (Service Data Adaptation Protocol) sublayer 356, and the SDAP sublayer 356 is responsible for mapping between a QoS stream and a DRB (Data Radio Bearer) to support the diversity of services. Although not shown in the figure, the first communication node device may have several upper layers above the L2 layer 355, comprising a network layer (e.g., IP layer) terminating at the P-GW on the network side and an application layer terminating at the other end (e.g., remote UE and a server, etc.) of a connection.

As one embodiment, the wireless protocol architecture in FIG. 3 is applicable to a first node in the present application.

As one embodiment, the wireless protocol architecture in FIG. 3 is applicable to a second node in the present application.

As one embodiment, a first information block is generated in the RRC sublayer 306.

As one embodiment, the first information block is generated in the MAC sublayer 302.

As one embodiment, the first information block is generated in the MAC sublayer 352.

As one embodiment, the first information block is generated at the PHY301.

As one embodiment, the first information block is generated at a PHY 351.

As one embodiment, a second information block is generated at the RRC sublayer 306.

As one embodiment, the second information block is generated at the MAC sublayer 302.

As one embodiment, the second information block is generated at the MAC sublayer 352.

As one embodiment, the second information block is generated at the PHY301.

As one embodiment, the second information block is generated at the PHY351.

As one embodiment, target signaling is generated at the PHY301.

As one embodiment, the target signaling is generated at the PHY351.

As one embodiment, the target signal is generated at the PHY301.

As one embodiment, the target signal is generated at the PHY351.

## Embodiment 4

Embodiment 4 illustrates a schematic diagram of a first communication device and a second communication device according to one embodiment of the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In a transmission from the first communication device 410 to the second communication device 450, at the first communication device 410, an upper-layer data packet from a core network is provided to the controller/processor 475. The controller/processor 475 implements the functionality of an L2 layer. In a DL, the controller/processor 475 provides header compression, encryption, packet segmentation and reordering, multiplexing between logical and transmission channels, and radio resource assignment to the second communication device 450 based on various priority metrics. The controller/processor 475 is also responsible for HARQ operations, retransmission of lost packets, and signaling to the second communication device 450. The transmitting processor 416 and the multi-antenna transmitting processor 471 implement various signal processing functions for an L1 layer. The transmitting processor 416 implements coding and interleaving to facilitate forward error correction (FEC) at the second communication device 450, as well as constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more parallel streams. The transmitting processor 416 then maps each parallel stream to a subcarrier, multiplexes the modulated symbols with a reference signal (e.g., pilot) in time domain and/or frequency domain, and then uses an inverse fast Fourier transform (IFFT) to generate a physical channel carrying a time-domain multi-carrier symbol stream. The multi-antenna transmitting processor 471 then performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the first communication device 410 to the second communication device 450, at the second communication device 450, each receiving device 454 receives a signal through a corresponding antenna 452 thereof. Each receiving device 454 recovers information modulated onto a radio frequency carrier, and converts the radio frequency stream into a baseband multi-carrier symbol stream and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream from the time domain to the frequency domain after the receiving analog precoding/beamforming operation. In the frequency domain, a physical layer data signal and the reference signal are demultiplexed by the receiving processor 456, wherein the reference signal will be used for channel estimation, and any parallel stream destined for the second communication device 450 is recovered after the data signal undergoes multi-antenna detection in the multi-antenna receiving processor 458. Symbols on each parallel stream are demodulated and recovered in the receiving processor 456, and soft decisions are generated. The receiving processor 456 then decodes and deinterleaves the soft decisions to recover upper-layer data and control signals transmitted by the first communication device 410 on the physical channel. The upper-layer data and the control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In the DL (DownLink), the controller/-processor 459 provides demultiplexing between transmission and logical channels, packet reassembly, decryption, header decompression, and control signal processing to recover upper-layer data packets from the core network. The upper-layer data packets are then provided to all protocol layers above the L2 layer. Various control signals may also be provided to an L3 for L3 processing. The controller/processor 459 is also responsible for error detection using an acknowledgement (ACK) and/or negative acknowledgement (NACK) protocol to support HARQ operations.

In a transmission from the second communication device 450 to the first communication device 410, at the second communication device 450, the upper-layer data packets are provided to the controller/processor 459 using the data source 467. The data source 467 represents all protocol layers above the L2 layer. Similar to a sending function at the first communication device 410 described in the DL, the controller/processor 459 implements header compression, encryption, packet segmentation and reordering, and multiplexing between logical and transmission channels based on the radio resource assignment of the first communication device 410, and implements the functions of the L2 layer for the user plane and the control plane. The controller/processor 459 is also responsible for HARQ operations, retransmission of lost packets, and signaling to the first communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing, and then, the transmitting processor 468 modulates a generated parallel stream into a multi-carrier/single-carrier symbol stream, which is provided to different antennas 452 via the transmitting device 454 after undergoing analog precoding/beamforming operations in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the second communication device 450 to the first communication device 410, functions at the first communication device 410 are similar to the receiving functions at the second communication device 450 described in the transmission from the first communication device 410 to the second communication device 450. Each receiving device 418 receives a radio-frequency signal through a corresponding antenna 420 thereof, converts the received radio-frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. The controller/processor 475 provides demultiplexing between transmission and logical channels, packet reassembly, decryption, header decompression and control signal processing to recover upper-layer data packets from the second communication device 450. The upper-layer data packets from the controller/processor 475 may be provided to the core network. The controller/processor 475 is also responsible for error detection using the ACK and/or NACK protocol to support HARQ operations.

As one embodiment, the second communication device 450 comprises: at least one processor and at least one memory, the at least one memory comprising a computer program code; and the at least one memory and the computer program code are configured to be used together with the at least one processor. The second communication device 450 apparatus at least: receives a second information block, the second information block being used for determining a second resource configuration, and the second resource configuration being used for determining at least one resource; receives target signaling, the target signaling being used for scheduling a target signal on a first cell; receives a first information block, the first information block being used for determining a first resource configuration, and the first resource configuration being used for determining at least one resource; and sends the target signal in a target time domain resource, or forgoes sending the target signal in the target time domain resource, wherein the target time domain resource depends on the second resource configuration, whether the target signal is forgone being sent in the target time domain resource or not depends on whether a first condition is met or not, when the first condition is met, the target signal is forgone being sent in the target time domain resource, and the first condition comprises: the target time domain resource and the at least one resource determined by the first resource configuration overlap in time domain.

As one embodiment, the second communication device 450 comprises: a memory storing a computer-readable instruction program, the computer-readable instruction program generating actions when executed by at least one processor, and the actions comprising: receiving the second information block, the second information block being used for determining the second resource configuration, and the second resource configuration being used for determining at least one resource; receiving the target signaling, the target signaling being used for scheduling the target signal on the first cell; receiving the first information block, the first information block being used for determining the first resource configuration, and the first resource configuration being used for determining at least one resource; and sending the target signal in the target time domain resource, or forgoing sending the target signal in the target time domain resource, wherein the target time domain resource depends on the second resource configuration, whether the target signal is forgone being sent in the target time domain resource or not depends on whether the first condition is met or not, when the first condition is met, the target signal is forgone being sent in the target time domain resource, and the first condition comprises: the target time domain resource and the at least one resource determined by the first resource configuration overlap in time domain.

As one embodiment, the first communication device 410 comprises: at least one processor and at least one memory, the at least one memory comprising a computer program code; and the at least one memory and the computer program code are configured to be used together with the at least one processor. The first communication device 410 apparatus at least: sends the second information block, the second information block being used for determining the second resource configuration, and the second resource configuration being used for determining at least one resource; sends the target signaling, the target signaling being used for scheduling the target signal on the first cell; sends the first information block, the first information block being used for determining the first resource configuration, and the first information configuration being used for determining at least one resource; and receives the target signal in the target time domain resource, or forgoes receiving the target signal in the target time domain resource, wherein the target time domain resource depends on the second resource configuration, whether the target signal is forgone being received in the target time domain resource or not depends on whether the first condition is met or not, when the first condition is met, the target signal is forgone being received in the target time domain resource, and the first condition comprises: the target time domain resource and the at least one resource determined by the first resource configuration overlap in time domain.

As one embodiment, the first communication device 410 comprises: a memory storing a computer-readable instruction program, the computer-readable instruction program generating actions when executed by at least one processor, and the actions comprising: sending the second information block, the second information block being used for determining the second resource configuration, and the second resource configuration being used for determining at least one resource; sending the target signaling, the target signaling being used for scheduling the target signal on the first cell; sending the first information block, the first information block being used for determining the first resource configuration, and the first resource configuration being used for determining at least one resource; and receiving the target signal in the target time domain resource, or forgoing receiving the target signal in the target time domain resource, wherein the target time domain resource depends on the second resource configuration, whether the target signal is forgone being received in the target time domain resource or not depends on whether the first condition is met or not, when the first condition is met, the target signal is forgone being received in the target time domain resource, and the first condition comprises: the target time domain resource and the at least one resource determined by the first resource configuration overlap in time domain.

As one embodiment, a first node in the present application comprises the second communication device 450.

As one embodiment, a second node in the present application comprises the first communication device 410.

As one embodiment, at least one of {the antenna 452, the receiving device 454, the receiving processor 456, the multi-antenna receiving processor 458, the controller/processor 459, the memory 460, and the data source 467} is used for receiving the first information block in the present application; and at least one of {the antenna 420, the transmitting device 418, the transmitting processor 416, the multi-antenna transmitting processor 471, the controller/processor 475, and the memory 476} is used for sending the first information block in the present application.

As one embodiment, at least one of {the antenna 452, the receiving device 454, the receiving processor 456, the multi-antenna receiving processor 458, the controller/processor 459, the memory 460, and the data source 467} is used for receiving the second information block in the present application; and at least one of {the antenna 420, the transmitting device 418, the transmitting processor 416, the multi-antenna transmitting processor 471, the controller/processor 475, and the memory 476} is used for sending the second information block in the present application.

As one embodiment, at least one of {the antenna 452, the receiving device 454, the receiving processor 456, the multi-antenna receiving processor 458, the controller/processor 459, the memory 460, and the data source 467} is used for receiving the target signaling in the present application; and at least one of {the antenna 420, the transmitting device 418, the transmitting processor 416, the multi-antenna transmitting processor 471, the controller/processor 475, and the memory 476} is used for sending the target signaling in the present application.

As one embodiment, at least one of {the antenna 452, the transmitting device 454, the transmitting processor 468, the multi-antenna transmitting processor 457, the controller/processor 459, and the memory 460} is used for sending the target signal in the present application; and at least one of {the antenna 420, the receiving device 418, the receiving processor 470, the multi-antenna receiving processor 472, the controller/-processor 475, and the memory 476} is used for receiving the target signal in the present application.

## Embodiment 5

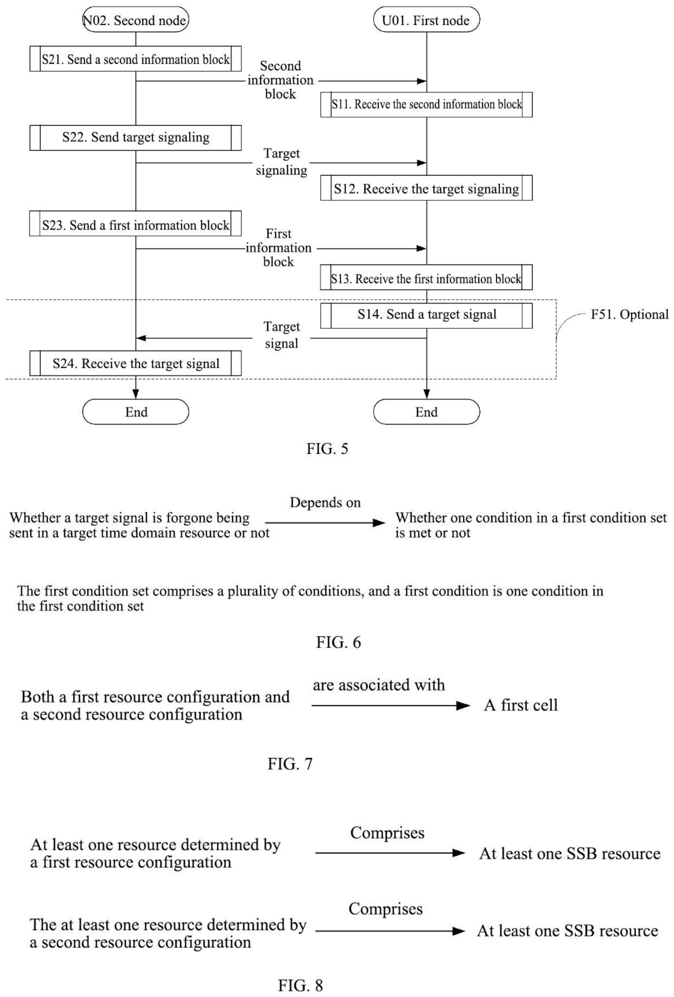

Embodiment 5 illustrates a flowchart of wireless transmission according to one embodiment of the present application, as shown in FIG. 5. In FIG. 5, a first node U01 and a second node N02 are two communication nodes transmitted through an air interface, respectively, wherein a step in a dotted block F51 is optional.

For **the first node U01,** a second information block is received in step S11; target signaling is received in step S12; a first information block is received in step S13; and a target signal is sent in step S14.

For **the second node N02,** the second information block is sent in step S21; the target signaling is sent in step S22; the first information block is sent in step S23; and the target signal is received in step S24.

In Embodiment 5, the second information block is used for determining a second resource configuration, and the second resource configuration is used for determining at least one resource; the target signaling is used for scheduling the target signal on a first cell; the first information block is used for determining a first resource configuration, and the first resource configuration is used for determining at least one resource; and the target signal is sent in a target time domain resource, or the target signal is forgone being sent in the target time domain resource, wherein the target time domain resource depends on the second resource configuration, whether the target signal is forgone being sent in the target time domain resource or not depends on whether a first condition is met or not, when the first condition is met, the target signal is forgone being sent in the target time domain resource, and the first condition comprises: the target time domain resource and the at least one resource determined by the first resource configuration overlap in time domain.

As one embodiment, the first node U01 is a first node in the present application.

As one embodiment, the second node N02 is a second node in the present application.

As one embodiment, the step in the dotted block F51 is optional.

As one embodiment, the step in the dotted box F51 exists.

As one embodiment, the step in the dotted box F51 does not exist.

As one embodiment, when the first condition is met, the step in the dotted box F51 does not exist.

As one embodiment, when the first condition is not met, the step in the dotted box F51 exists.

As one embodiment, the air interface between the second node N02 and the first node U01 comprises a wireless interface between a base station device and user equipment.

As one embodiment, the air interface between the second node N02 and the first node U01 comprises the wireless interface between a relay node device and user equipment.

As one embodiment, the air interface between the second node N02 and the first node U01 comprises the wireless interface between user equipment and user equipment.

As one embodiment, the first information block is transmitted in a PDSCH (Physical downlink shared channel).

As one embodiment, the first information block is transmitted in a PDCCH (Physical Downlink Control Channel).

As one embodiment, the first information block is transmitted in the PDSCH or the PDCCH.

As one embodiment, the second information block is transmitted in the PDSCH.

As one embodiment, the second information block is transmitted in the PDCCH.

As one embodiment, the second information block is transmitted in the PDSCH or the PDCCH.

As one embodiment, the target signaling is transmitted in the PDCCH.

As one embodiment, the target signal is transmitted on the PUSCH.

As one embodiment, the step in the dotted box F51 exists, and the target signal is transmitted on the PUSCH.

As one embodiment, the first information block is used by the first node U01 for determining the first resource configuration.

As one embodiment, the second information block is used by the first node U01 for determining the second resource configuration.

## Embodiment 6

Embodiment 6 illustrates a schematic diagram of a first condition set according to one embodiment of the present application, as shown in FIG. 6.

In Embodiment 6, whether a target signal is forgone being sent in a target time domain resource or not depends on whether one condition in the first condition set is met or not, the first condition set comprising a plurality of conditions, and the first condition being one condition in the first condition set; and when there is one condition in the first condition set being met, the target signal is forgone being sent in the target time domain resource.

As one embodiment, only when there is one condition in the first condition set being met, the target signal is forgone being sent in the target time domain resource.

As one embodiment, only when there are one or more conditions in the first condition set being met, the target signal is forgone being sent in the target time domain resource.

As one embodiment, only when there is at least one condition in the first condition set being met, the target signal is forgone being sent in the target time domain resource.

As one embodiment, when the first condition is not met and one condition in the first condition set other than the first condition is met, the target signal is forgone being sent in the target time domain resource.

As one embodiment, when the first condition is not met and one or more conditions in the first condition set other than the first condition are met, the target signal is forgone being sent in the target time domain resource.

As one embodiment, when the first condition is not met and at least one condition in the first condition set other than the first condition is met, the target signal is forgone being sent in the target time domain resource.

As one embodiment, when all conditions in the first condition set are not met, the target signal is sent on the target time domain resource.

As one embodiment, a second condition is one condition in the first condition set; and the second condition comprises: a priority of the target signal is lower than a priority of a first signal, and a time domain resource occupied by the first signal and the target time domain resource overlap.

As one sub-embodiment of the above embodiment, the first signal is a PUSCH.

As one sub-embodiment of the above embodiment, the first signal is a PUCCH.

As one sub-embodiment of the above embodiment, a priority index of the first signal is 1, and the priority index of the target signal is 0.

As one sub-embodiment of the above embodiment, the priority index of the first signal is higher than the priority index of the target signal.

As one sub-embodiment of the above embodiment, the larger the priority index, the higher a corresponding priority.

As one embodiment, the second condition comprises: the priority of the target signal is lower than the priority of the first signal, and the time domain resource occupied by the first signal is the same as the target time domain resource.

As one embodiment, the time domain resource occupied by the first signal comprises a slot to which the first signal belongs.

As one embodiment, the time domain resource occupied by the first signal comprises a symbol occupied by the first signal.

## Embodiment 7

Embodiment 7 illustrates a schematic diagram of a first resource configuration and a second resource configuration associated with a first cell according to one embodiment of the present application, as shown in FIG. 7.

In Embodiment 7, both the first resource configuration and the second resource configuration are associated with the first cell.

As one embodiment, the same PCI (Physical Cell Identity) is used for generating a PSS and an SSS in all SSB resources indicated by the first resource configuration and the second resource configuration.

As one embodiment, the PCI of the first cell is used for generating the PSS and the SSS in all SSB resources indicated by the first resource configuration and the second resource configuration.

As one embodiment, the PCI of the first cell is used for generating the PSS and the SSS in part of SSB resources indicated by the first resource configuration and the second resource configuration.

As one embodiment, the PCI of the first cell is used for generating the PSS and the SSS in part of SSB resources indicated by the first resource configuration, and the PCI of the first cell is used for generating the PSS and the SSS in part of SSB resources indicated by the second resource configuration.

As one embodiment, the PCI of the first cell is used for generating the PSS and the SSS in all SSB resources indicated by the first resource configuration, and the PCI of the first cell is used for generating the PSS and the SSS in part of SSB resources indicated by the second resource configuration.

As one embodiment, the PCI of the first cell is used for generating the PSS and the SSS in part of SSB resources indicated by the first resource configuration, and the PCI of the first cell is used for generating the PSS and the SSS in all SSB resources indicated by the second resource configuration.

As one embodiment, the PCI comprises a first identity and a second identity.

As one embodiment, at least the second identity in the first identity and the second identity is used for generating the PSS.

As one embodiment, the second identity is used for generating a PSS.

As one embodiment, both the first identity and the second identity are used for generating the SSS.

As one embodiment, the first identity is $N_{ID}^{(1)}$, and the second identity is $N_{ID}^{(2)}$.

As one embodiment, $N_{ID}^{(1)}$ is one non-negative integer.

As one embodiment, $N_{ID}^{(1)}$ is one non-negative integer not greater than 335.

As one embodiment, $N_{ID}^{(1)}$ is one non-negative integer ranging from 0 to 335.

As one embodiment, $N_{ID}^{(2)}$ is one non-negative integer.

As one embodiment, $N_{ID}^{(2)}$ is one non-negative integer not greater than 2.

As one embodiment, $N_{ID}^{(2)}$ is one of 0, 1, and 2.

As one embodiment, the PCI is equal to

$$3N_{ID}^{(1)} + N_{ID}^{(2)}.$$

As one embodiment, a process that the PCI is used for generating the PSS and the SSS specifically refers to Chapter 7 of 3GPP TS38.211.

As one embodiment, the meaning of "both the first resource configuration and the second resource configuration are associated with a first cell" comprises: both the first resource configuration and the second resource configuration are configured to the first cell.

As one embodiment, the meaning of "both the first resource configuration and the second resource configuration are associated with a first cell" comprises: both at least one SSB resource determined by the first resource configuration and at least one SSB resource determined by the second resource configuration are on the first cell.

As one embodiment, the meaning of "both the first resource configuration and the second resource configuration are associated with a first cell" comprises: all SSB resources determined by the first resource configuration and the second resource configuration are on the first cell.

As one embodiment, the meaning of "both the first resource configuration and the second resource configuration are associated with a first cell" comprises: SSB resources determined by at least one of the first resource configuration and the second resource configuration are on the first cell.

As one embodiment, the meaning of "both the first resource configuration and the second resource configuration are associated with a first cell" comprises: both the first resource configuration and the second resource configuration are indicated to the first cell, and only part of SSB resources in all SSB resources indicated by the first resource configuration and the second resource configuration are on the first cell.

As one embodiment, the meaning of "both the first resource configuration and the second resource configuration are associated with a first cell" comprises: the SSB resources indicated by the first resource configuration and the second resource configuration are indicated to synchronization of the first cell.

As one embodiment, the meaning of "both the first resource configuration and the second resource configuration are associated with a first cell" comprises: the SSB resources indicated by the first resource configuration and the second resource configuration are indicated to synchronization of the first cell, and only part of SSB resources in all SSB resources indicated by the first resource configuration and the second resource configuration are on the first cell.

As one embodiment, the meaning of "both the first resource configuration and the second resource configuration are associated with a first cell" comprises: the SSB resources indicated by the first resource configuration and the second resource configuration are indicated to synchronization of the first cell, and the at least one SSB resource determined by the first resource configuration and the at least one SSB resource determined by the second resource configuration are on different serving cells.

As one embodiment, the meaning of "both the first resource configuration and the second resource configuration are associated with a first cell" comprises: the SSB resources indicated by the first resource configuration and the second resource configuration are indicated to synchronization of the first cell, and at least one SSB resource determined by only one of the first resource configuration or the second resource configuration is on the first cell.

As one embodiment, the meaning of "both the first resource configuration and the second resource configuration are associated with a first cell" comprises: the PCI of the first cell is used for generating the PSS and the SSS in all SSB resources determined by the first resource configuration and the second resource configuration, and the first resource configuration and the second resource configuration are configured to synchronization of the first cell.

As one embodiment, the meaning of "both the first resource configuration and the second resource configuration are associated with a first cell" comprises: the PCI of the first cell is used for generating the PSS and the SSS of only part of SSB resources amongst all SSB resources determined by the first resource configuration and the second resource configuration, and the first resource configuration and the second resource configuration are indicated to synchronization of the first cell.

As one embodiment, the meaning of "both the first resource configuration and the second resource configuration are associated with a first cell" comprises: the PCI of the first cell is used for generating the PSS and the SSS in all SSB resources determined by only one of the first resource configuration and the second resource configuration, and the first resource configuration and the second resource configuration are indicated to synchronization of the first cell.

As one embodiment, the meaning of "both the first resource configuration and the second resource configuration are associated with a first cell" comprises: the PCI of the first cell is used for generating the PSS and the SSS in part of SSB resources determined by only one of the first resource configuration and the second resource configuration, and the first resource configuration and the second resource configuration are indicated to synchronization of the first cell.

As one embodiment, synchronization of the first cell comprises time synchronization of the first cell.

As one embodiment, the time synchronization of the first cell comprises frame synchronization.

As one embodiment, the time synchronization of the first cell comprises the frame synchronization and slot synchronization.

As one embodiment, the time synchronization of the first cell comprises the frame synchronization, the slot synchronization, and symbol synchronization.

As one embodiment, synchronization of the first cell comprises frequency synchronization of the first cell.

As one embodiment, synchronization of the first cell comprises the time synchronization and the frequency synchronization of the first cell.

**Embodiment 8**

Embodiment 8 illustrates a schematic diagram of a first resource configuration and a second resource configuration according to one embodiment of the present application, as shown in FIG. 8. In Embodiment 8, at least one resource determined by the first resource configuration comprises at least one SSB resource, and the at least one resource determined by the second source configuration comprises at least one SSB resource.

As one embodiment, one SSB resource determined by the first resource configuration and one SSB resource determined by the second resource configuration are identified by the same index.

As one embodiment, one SSB resource determined by the first resource configuration and one SSB resource determined by the second resource configuration are respectively identified by different indexes.

As one embodiment, the SSB resource is an SS/PBCH block resource.

As one embodiment, the second resource configuration belongs to an RRC IE.

As one embodiment, the second resource configuration belongs to an SIB1.

As one embodiment, the second resource configuration belongs to IE ServingCellConfigCommonSIB.

As one embodiment, the second resource configuration belongs to IE ServingCellConfigCommon.

As one embodiment, a name of the second resource configuration comprises ssb-PositionsInBurst.

As one embodiment, the first resource configuration belongs to the RRC IE.

As one embodiment, the first resource configuration belongs to the SIB1.

As one embodiment, the first resource configuration belongs to IE ServingCellConfigCommonSIB.

As one embodiment, the first resource configuration belongs to IE ServingCellConfigCommon.

As one embodiment, the name of the first resource configuration comprises ssb-PositionsInBurst.

As one embodiment, the second resource configuration and the first resource configuration belong to the same RRC IE.

As one embodiment, the second resource configuration and the first resource configuration are used for indicating the SSB resource of the same serving cell.

As one embodiment, the second resource configuration and the first resource configuration are used for indicating the SSB resource of a first cell.

As one embodiment, the second resource configuration and the first resource configuration are respectively used for indicating SSB resources of different serving cells.

As one embodiment, the second resource configuration is used for indicating the SSB resource of the first cell, and the first resource configuration is used for indicating the SSB resource of one serving cell other than the first cell.

As one embodiment, the first resource configuration is used for indicating the SSB resource of the first cell, and the second resource configuration is used for indicating the SSB resource of one serving cell other than the first cell.

As one embodiment, the second resource configuration and the first resource configuration are respectively used for indicating the SSB resources of different serving cells other than the first cell.

**Embodiments 9A-9B**

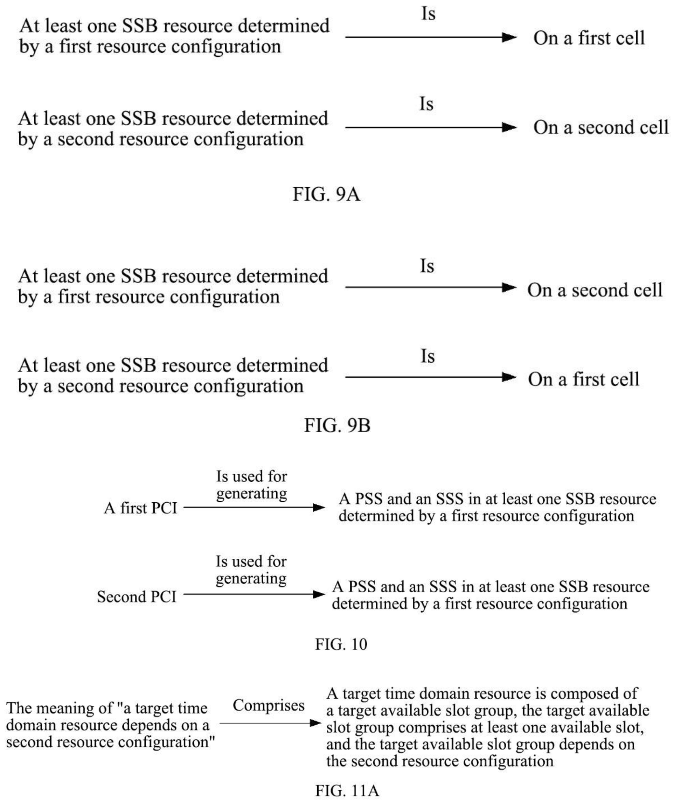

Embodiments 9A-9B respectively illustrate a schematic diagram of a first resource configuration, a second resource configuration, a first cell, and a second cell according to one embodiment of the present application, as shown in FIGS. 9A-9B.

In Embodiment 9A, at least one SSB resource determined by the first resource configuration is on the first cell, and the at least one SSB resource determined by the second resource configuration is on the second cell; and the first cell is different from the second cell.

In Embodiment 9B, the at least one SSB resource determined by the first resource configuration is on the second cell, and the at least one SSB resource determined by the second resource configuration is on the first cell; and the first cell is different from the second cell.

As one embodiment, the second cell is an SCell.

As one embodiment, the second cell is an SSB-less SCell.

As one embodiment, the second cell is a PCell.

As one embodiment, the second cell is an SpCell.

As one embodiment, the second cell is a PSCell.

As one embodiment, the second cell is a serving cell of a first node device.

As one embodiment, the second cell is one serving cell.

As one embodiment, the first cell is the SCell, and the second cell is the PCell.

As one embodiment, the first cell is the SCell, and the second cell is the SpCell.

As one embodiment, the first cell is the SCell, and the second cell is the PSCell.

As one embodiment, the first cell and the second cell are different SCells.

As one embodiment, the first cell is the SSB-less SCell, and the second cell is the PCell.

As one embodiment, the first cell is the SSB-less SCell, and the second cell is the SpCell.

As one embodiment, the first cell is the SSB-less SCell, and the second cell is the PSCell.

As one embodiment, the first cell is the SSB-less SCell, and the second cell is the SCell different from the first cell.

As one embodiment, the first cell is the PCell, and the second cell is the SCell.

As one embodiment, the first cell is the SpCell, and the second cell is the SCell.

As one embodiment, the first cell is the PSCell, and the second cell is the SCell.

## Embodiment 10

Embodiment 10 illustrates a schematic diagram of a first PCI and a second PCI according to one embodiment of the present application, as shown in FIG. 10.

In Embodiment 10, the first PCI is used for generating a PSS and an SSS in at least one SSB resource determined by a first resource configuration, the second PCI is used for generating a PSS and an SSS in the at least one SSB resource determined by the first resource configuration, and the first PCI is different from the second PCI.

As one embodiment, one of the first PCI or the second PCI is a PCI of a first cell.

As one embodiment, the first PCI is the PCI of the first cell, and the second PCI is the PCI of a second cell.

As one embodiment, the first PCI is the PCI of the second cell, and the second PCI is the PCI of the first cell.

As one embodiment, the first PCI and the second PCI are PCIs of different serving cells.

## Embodiments 11A-11B

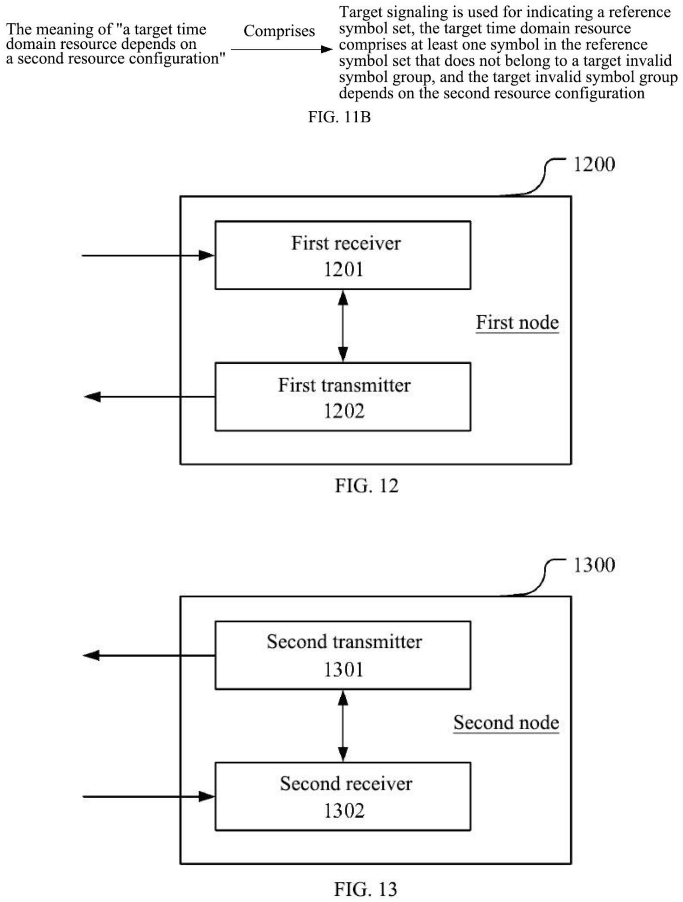

Embodiments 11A-11B respectively illustrate a schematic diagram of a target time domain resource depending on a second resource configuration according to one embodiment of the present application, as shown in FIGS. 11A-11B.

In Embodiment 11A, the meaning of "a target time domain resource depending on a second resource configuration" comprises: the target time domain resource is composed of a target available slot group, the target available slot group comprises at least one available slot, and the target available slot group depends on the second resource configuration.

In Embodiment 11B, the meaning of "a target time domain resource depending on a second resource configuration" comprises: target signaling is used for indicating a reference symbol set, the target time domain resource comprises at least one symbol in the reference symbol set that does not belong to a target invalid symbol group, and the target invalid symbol group depends on the second resource configuration.

As one embodiment, when AvailableSlotCounting is enabled, a target signal is transmitted in the target available slot group, the target available slot group comprises at least one available slot, and the target available slot group depends on the second resource configuration.

As one embodiment, when AvailableSlotCounting is enabled, the target signal is a PUSCH transmission of a PUSCH repetition type A, the target signal is transmitted in the target available slot group, the target available slot group comprises at least one available slot, and the target available slot group depends on the second resource configuration.

As one embodiment, when AvailableSlotCounting is enabled, the target signal is the PUSCH transmission of the PUSCH repetition type A, the target signaling is DCI signaling, a format of the target signaling is DCI format 0_1 or DCI format 0_2, the target signal is transmitted in the target available slot group, the target available slot group comprises at least one available slot, and the target available slot group depends on the second resource configuration.

As one embodiment, when AvailableSlotCounting is enabled, the target signal is a PUSCH transmission of PUSCH repetition type A, the number of repetitions of the target signal is greater than 1, the target signaling is the DCI signaling, a format of the target signaling is DCI format 0_1 or DCI format 0_2, the target signal is transmitted in the target available slot group, the target available slot group comprises at least one available slot, and the target available slot group depends on the second resource configuration.

As one embodiment, the target signal is the PUSCH transmission of TB processing over multiple slots, the target signal is transmitted in the target available slot group, the target available slot group comprises at least one available slot, and the target available slot group depends on the second resource configuration.

As one embodiment, the target signal is the PUSCH transmission of the TB processing over multiple slots, the target signaling is the DCI signaling, the format of the target signaling is DCI format 0_1 or DCI format 0_2, the target signal is transmitted in the target available slot group, the target available slot group comprises at least one available slot, and the target available slot group depends on the second resource configuration.

As one embodiment, the target signal is the PUSCH transmission of the PUSCH repetition type A, the target signaling is RAR uplink grant signaling, the target signal is transmitted in the target available slot group, the target available slot group comprises at least one available slot, and the target available slot group depends on the second resource configuration.

As one embodiment, the target signal is the PUSCH transmission of the PUSCH repetition type A, the target signaling is the DCI signaling, the format of the target signaling is DCI format 0_0 scrambled by a TC-RNTI, the target signal is transmitted in the target available slot group, the target available slot group comprises at least one available slot, and the target available slot group depends on the second resource configuration.

As one embodiment, the target signaling is used for indicating the reference symbol set.

As one embodiment, the target signaling comprises a TDRA information field.

As one embodiment, the target signaling is the DCI signaling, the format of the target signaling is DCI format 0_1 or DCI format 0_2, and the TDRA information field of the target signaling indicates the reference symbol set.

As one embodiment, the target signaling is the DCI signaling, the format of the target signaling is DCI format 0_0 scrambled by the TC-RNTI, and the TDRA information field of the target signaling indicates the reference symbol set.

As one embodiment, a value of the TDRA information field of the target signaling indicates a row index of a resource assignment table.

As one embodiment, the value of the TDRA information field of the target signaling is m, and the row index of the resource assignment table is m+1.

As one embodiment, for the specific definition of the TDRA information field, refer to Chapter 7.3.1 of 3GPP TS 38.212.

As one embodiment, the target signal is the PUSCH transmission of the PUSCH repetition type A or the PUSCH transmission of the TB processing over multiple slots, and the reference symbol set belongs to consecutive $N \cdot K$ slots.

As one embodiment, the target signal is the PUSCH transmission of the PUSCH repetition type A or the PUSCH transmission of the TB processing over multiple slots, the reference symbol set belongs to the consecutive $N \cdot K$ slots, and the reference symbol set has the same distribution in the consecutive $N \cdot K$ slots.

As one embodiment, "the reference symbol set has the same distribution in the consecutive $N \cdot K$ slots" means: the number of symbols occupied by the reference symbol set in each slot amongst the consecutive $N \cdot K$ slots is the same.

As one embodiment, "the reference symbol set has the same distribution in the consecutive $N \cdot K$ slots" means: a symbol position occupied by the reference symbol set in each slot amongst the consecutive $N \cdot K$ slots is the same.

As one embodiment, "the reference symbol set has the same distribution in the consecutive $N \cdot K$ slots" means: a symbol index occupied by the reference symbol set in each slot amongst the consecutive $N \cdot K$ slots is the same.

As one embodiment, $N$ is a positive integer.

As one embodiment, $N$ is greater than 1.

As one embodiment, $N$ is equal to 1.

As one embodiment, $N$ is default.

As one embodiment, $N$ is configured by numberOfSlotsTBoMS.

As one embodiment, $N$ indicates the number of slots used for TBS determination.

As one embodiment, $K$ is a positive integer.

As one embodiment, $K$ is greater than 1.

As one embodiment, $K$ is equal to 1.

As one embodiment, $K$ is default.

As one embodiment, $K$ is configured by numberOfRepetitions.

As one embodiment, $K$ is configured by pusch-AggregationFactor.

As one embodiment, $K$ indicates the number of repetitions.

As one embodiment, the consecutive $N \cdot K$ slots comprise a target invalid slot group.

As one embodiment, the target invalid slot group comprises n slots.

As one embodiment, n is a non-negative integer.

As one embodiment, n is less than $N \cdot K$.

As one embodiment, the target available slot group comprises at least one slot amongst the consecutive $N \cdot K$ slots that does not belong to the target invalid slot group.

As one embodiment, the target available slot group comprises one or more slots amongst the consecutive $N \cdot K$ slots that do not belong to the target invalid slot group.

As one embodiment, the target available slot group comprises all slots amongst the consecutive $N \cdot K$ slots that do not belong to the target invalid slot group.

As one embodiment, the target available slot group is for the PUSCH transmission of the PUSCH repetition type A.

As one embodiment, the target available slot group is for the PUSCH transmission of the TB processing over multiple slots.

As one embodiment, the meaning of "the target available slot group depends on the second resource configuration" comprises: the target invalid slot group depends on the second resource configuration.

As one embodiment, the meaning of "the target available slot group depends on the second resource configuration" comprises: the target invalid slot group depends on the at least one resource determined by the second resource configuration.

As one embodiment, the meaning of "the target invalid slot group depends on the second resource configuration" comprises: each slot in the target invalid slot group and the at least one resource determined by the second resource configuration overlap in time domain.

As one embodiment, the meaning of "the target invalid slot group depends on the second resource configuration" comprises: each slot in the target invalid slot group and the at least one resource determined by the second resource configuration overlap in time domain, and at least one symbol of the overlapping part belongs to the reference symbol set.

As one embodiment, the meaning of "the target invalid slot group depends on the second resource configuration" comprises: each slot in the target invalid slot group and the at least one resource determined by the second resource configuration overlap in time domain, and one or more symbols of the overlapping part belong to the reference symbol set.

As one embodiment, the meaning of "the target invalid slot group depends on the second resource configuration" comprises: each slot in the target invalid slot group and the at least one resource determined by the second resource configuration overlap in time domain, and all symbols of the overlapping part belong to the reference symbol set.

As one embodiment, the target signal is the PUSCH transmission of a PUSCH repetition type B, the target signaling is used for indicating the reference symbol set, the target time domain resource comprises at least one symbol in the reference symbol set that does not belong to the target invalid symbol group, and the target invalid symbol group depends on the second resource configuration.

As one embodiment, the reference symbol set is composed of symbols comprised in one nominal repetition.

As one embodiment, the reference symbol set is composed of symbols comprised in one or more nominal repetitions.

As one embodiment, the nominal repetition is for the PUSCH repetition type B.

As one embodiment, for the specific definition of the nominal repetition, refer to Chapter 6.1 of 3GPP TS38.214.

As one embodiment, the target time domain resource comprises one or more symbols in the reference symbol set that do not belong to the target invalid symbol group.

As one embodiment, the target time domain resource comprises all symbols in the reference symbol set that do not belong to the target invalid symbol group.

As one embodiment, the meaning of "the target invalid symbol group depends on the second resource configuration" comprises: the target invalid symbol group comprises symbols occupied by the at least one resource determined by the second resource configuration.

As one embodiment, the meaning of "the target invalid symbol group depends on the second resource configuration" comprises: the target invalid symbol group comprises all symbols occupied by the at least one resource determined by the second resource configuration.

As one embodiment, the meaning of "the target invalid symbol group depends on the second resource configuration" comprises: the target invalid symbol group comprises part of or all symbols occupied by the at least one resource determined by the second resource configuration.

As one embodiment, the meaning of "the target invalid symbol group depends on the second resource configuration" comprises: the target invalid symbol group comprises symbols occupied by an SSB resource determined by the second resource configuration.

As one embodiment, the meaning of "the target invalid symbol group depends on the second resource configuration" comprises: the target invalid symbol group comprises one or more symbols occupied by the SSB resource determined by the second resource configuration.

As one embodiment, the meaning of "the target invalid symbol group depends on the second resource configuration" comprises: the target invalid symbol group comprises all symbols occupied by the SSB resource determined by the second resource configuration.

As one embodiment, the meaning of "the target invalid symbol group depends on the second resource configuration" comprises: the target invalid symbol group comprises a DL symbol determined by the second resource configuration.

As one embodiment, the meaning of "the target invalid symbol group depends on the second resource configuration" comprises: the target invalid symbol group comprises one or more DL symbols determined by the second resource configuration.

As one embodiment, the meaning of "the target invalid symbol group depends on the second resource configuration" comprises: the target invalid symbol group comprises all DL symbols determined by the second resource configuration.

As one embodiment, the meaning of "the target invalid symbol group depends on the second resource configuration" comprises: the target invalid symbol group comprises an invalid symbol determined by the second resource configuration.

As one embodiment, the meaning of "the target invalid symbol group depends on the second resource configuration" comprises: the target invalid symbol group comprises one or more invalid symbols determined by the second resource configuration.

As one embodiment, the meaning of "the target invalid symbol group depends on the second resource configuration" comprises: the target invalid symbol group comprises all invalid symbols determined by the second resource configuration.

As one embodiment, the target invalid symbol group is for the target signal.

As one embodiment, the target invalid symbol group is for the PUSCH repetition type B.

**Embodiment 12**

Embodiment 12 illustrates a structural block diagram of a processing apparatus used in a first node device according to one embodiment of the present application, as shown in FIG. 12. In FIG. 12, a processing apparatus 1200 in the first node device comprises a first receiver 1201 and a first transmitter 1202.

As one embodiment, the first node device is user equipment.

As one embodiment, the first node device is a relay node device.

As one embodiment, the first receiver 1201 comprises at least one of {an antenna 452, a receiving device 454, a receiving processor 456, a multi-antenna receiving processor 458, a controller/processor 459, a memory 460, and a data source 467} in Embodiment 4.

As one embodiment, the first transmitter 1202 comprises at least one of {the antenna 452, a transmitting device 454, a transmitting processor 468, a multi-antenna transmitting processor 457, the controller/processor 459, the memory 460, and the data source 467} in Embodiment 4.

The first receiver 1201 receives a second information block, the second information block being used for determining a second resource configuration, and the second resource configuration being used for determining at least one resource; receives target signaling, the target signaling being used for scheduling a target signal on a first cell; and receives a first information block, the first information block being used for determining a first resource configuration, and the first resource configuration being used for determining at least one resource.

The first transmitter 1202 sends the target signal in a target time domain resource, or forgoes sending the target signal in the target time domain resource.

In Embodiment 12, the target time domain resource depends on the second resource configuration, whether the target signal is forgone being sent in the target time domain resource or not depends on whether a first condition is met or not, when the first condition is met, the target signal is forgone being sent in the target time domain resource, and the first condition comprises: the target time domain resource and the at least one resource determined by the first resource configuration overlap in time domain.

As one embodiment, whether the target signal is forgone being sent in the target time domain resource or not depends on whether one condition in a first condition set is met or not, the first condition set comprising a plurality of conditions, and the first condition being one condition in the first condition set; and when there is one condition in the first condition set being met, the target signal is forgone being sent in the target time domain resource.

As one embodiment, both the first resource configuration and the second resource configuration are associated with the first cell.

As one embodiment, the at least one resource determined by the first resource configuration comprises at least one SSB resource, and the at least one resource determined by the second resource configuration comprises at least one SSB resource.

As one embodiment, the at least one SSB resource determined by the first resource configuration is on the first cell, and the at least one SSB resource determined by the second resource configuration is on a second cell; and the first cell is different from the second cell.

As one embodiment, the at least one SSB resource determined by the first resource configuration is on the second cell, and the at least one SSB resource determined by the second resource configuration is on the first cell; and the first cell is different from the second cell.

As one embodiment, a first PCI is used for generating a PSS and an SSS in the at least one SSB resource determined by the first resource configuration, a second PCI is used for generating a PSS and an SSS in the at least one SSB resource determined by the first resource configuration, and the first PCI is different from the second PCI.

As one embodiment, the meaning of "the target time domain resource depends on the second resource configuration" comprises: the target time domain resource is composed of a target available slot group, the target available slot group comprises at least one available slot, and the target available slot group depends on the second resource configuration.

As one embodiment, the meaning of "the target time domain resource depends on the second resource configuration" comprises: the target signaling is used for indicating a reference symbol set, the target time domain resource comprises at least one symbol in the reference symbol set that does not belong to a target invalid symbol group, and the target invalid symbol group depends on the second resource configuration.

## Embodiment 13

Embodiment 13 illustrates a structural block diagram of a processing apparatus used in a second node device according to one embodiment of the present application, as shown in FIG. 13. In FIG. 13, a processing apparatus 1300 in the second node device comprises a second transmitter 1301 and a second receiver 1302.

As one embodiment, the second node device is a base station device.

As one embodiment, the second node device is user equipment.

As one embodiment, the second node device is a relay node device.

As one embodiment, the second transmitter 1301 comprises at least one of {an antenna 420, a transmitting device 418, a transmitting processor 416, a multi-antenna transmitting processor 471, a controller/-processor 475, and a memory 476} in Embodiment 4.

As one embodiment, the second receiver 1302 comprises at least one of {the antenna 420, a receiving device 418, a receiving processor 470, a multi-antenna receiving processor 472, the controller/processor 475, and the memory 476} in Embodiment 4.

The second transmitter 1301 sends a second information block, the second information block being used for determining a second resource configuration, and the second resource configuration being used for determining at least one resource; sends target signaling, the target signaling being used for scheduling a target signal on a first cell; and sends a first information block, the first information block being used for determining a first resource configuration, and the first resource configuration being used for determining at least one resource.

The second receiver 1302 receives the target signal in a target time domain resource, or forgoes receiving the target signal in the target time domain resource.

In Embodiment 13, the target time domain resource depends on the second resource configuration, whether the target signal is forgone being received in the target time domain resource or not depends on whether a first condition is met or not, when the first condition is met, the target signal is forgone being received in the target time domain resource, and the first condition comprises: the target time domain resource and the at least one resource determined by the first resource configuration overlap in time domain.

As one embodiment, whether the target signal is forgone being received in the target time domain resource or not depends on whether one condition in a first condition set is met or not, the first condition set comprising a plurality of conditions, and the first condition being one condition in the first condition set; and when there is one condition in the first condition set being met, the target signal is forgone being received in the target time domain resource.

As one embodiment, both the first resource configuration and the second resource configuration are associated with the first cell.

As one embodiment, the at least one resource determined by the first resource configuration comprises at least one SSB resource, and the at least one resource determined by the second resource configuration comprises at least one SSB resource.

As one embodiment, the at least one SSB resource determined by the first resource configuration is on the first cell, and the at least one SSB resource determined by the second resource configuration is on a second cell; and the first cell is different from the second cell.

As one embodiment, the at least one SSB resource determined by the first resource configuration is on the second cell, and the at least one SSB resource determined by the second resource configuration is on the first cell; and the first cell is different from the second cell.

As one embodiment, a first PCI is used for generating a PSS and an SSS in the at least one SSB resource determined by the first resource configuration, a second PCI is used for generating a PSS and an SSS in the at least one SSB resource determined by the first resource configuration, and the first PCI is different from the second PCI.

As one embodiment, the meaning of "the target time domain resource depends on the second resource configuration" comprises: the target time domain resource is composed of a target available slot group, the target available slot group comprises at least one available slot, and the target available slot group depends on the second resource configuration.

As one embodiment, the meaning of "the target time domain resource depends on the second resource configuration" comprises: the target signaling is used for indicating a reference symbol set, the target time domain resource comprises at least one symbol in the reference symbol set that does not belong to a target invalid symbol group, and the target invalid symbol group depends on the second resource configuration.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or a plurality of integrated circuits. Accordingly, each module unit in the above embodiments may be implemented in the form of hardware or in the form of a software function module, and the present application is not limited to any specific form of software and hardware combination. The user equipment, terminals and UE in the present application include but are not limited to drones, communication modules on the drones, remote-controlled airplanes, aircrafts, small airplanes, mobile phones, tablet computers, laptops, vehicle-mounted communication devices, wireless sensors, Internet cards, Internet of Things terminals, RFID terminals, NB-IOT terminals, MTC (Machine Type Communication) terminals, eMTC (enhanced MTC) terminals, data cards, Internet cards, vehicle-mounted communication devices, low-cost mobile phones, low-cost tablet computers and other wireless communication devices. The base stations or the system devices in the present application include but are not limited to a macrocellular base station, a microcellular base station, a Femtocell, a relay base station, a gNB (NR node B), a TRP (Transmitter Receiver Point), and other wireless communication devices.

The above are only preferred embodiments of the present application and are not used for limiting the scope of protection of the present application. Any changes and modifications made based on the embodiments described in the specification, if similar part of or all technical effects can be obtained, should be deemed obvious and fall within the protection scope of the present invention.

**Claims**

1. A first node used for wireless communication, comprising:

   a first receiver receiving a second information block, the second information block being used for determining a second resource configuration, and the second resource configuration being used for determining at least one resource; receiving target signaling, the target signaling being used for scheduling a target signal on a first cell; and receiving a first information block, the first information block being used for determining a first resource configuration, and the first resource configuration being used for determining at least one resource; and
   a first transmitter sending the target signal in a target time domain resource, or forgoing sending the target signal in a target time domain resource,
   wherein the target time domain resource depends on the second resource configuration, whether the target signal is forgone being sent in the target time domain resource or not depends on whether a first condition is met or not, when the first condition is met, the target signal is forgone being sent in the target time domain resource, and the first condition comprises: the target time domain resource and the at least one resource determined by the first resource configuration overlap in time domain.

2. The first node according to claim 1, wherein whether the target signal is forgone being sent in the target time domain resource or not depends on whether one condition in a first condition set is met or not, the first condition set comprising a plurality of conditions, and the first condition being one condition in the first condition set; and when there is one condition in the first condition set being met, the target signal is forgone being sent in the target time domain resource.

3. The first node according to claim 1 or 2, wherein both the first resource configuration and the second resource configuration are associated with the first cell.

4. The first node according to any one of claims 1 to 3, wherein the at least one resource determined by the first resource configuration comprises at least one SSB resource, and the at least one resource determined by the second resource configuration comprises at least one SSB resource.

5. The first node according to claim 4, wherein the at least one SSB resource determined by the first resource configuration is on the first cell, and the at least one SSB resource determined by the second resource configuration is on a second cell; and the first cell is different from the second cell;
   or the at least one SSB resource determined by the first resource configuration is on the second cell, and the at least one SSB resource determined by the second resource configuration is on the first cell; and the first cell is different from the second cell.

6. The first node device according to claim 4 or 5, wherein a first PCI is used for generating a PSS and an SSS in the at least one SSB resource determined by the first resource configuration, a second PCI is used for generating a PSS and an SSS in the at least one SSB resource determined by the first resource configuration, and the first PCI is different from the second PCI.

7. The first node according to any one of claims 1 to 6, wherein the target time domain resource depending on the second resource configuration comprises: the target time domain resource is composed of a target available slot group, the target available slot group comprises at least one available slot, and the target available slot group depends on the second resource configuration;
   or the target time domain resource depending on the second resource configuration comprises: the target signaling is used for indicating a reference symbol set, the target time domain resource comprises at least one symbol in the reference symbol set that does not belong to a target invalid symbol group, and the target invalid symbol group depends on the second resource configuration.

8. A second node used for wireless communication, comprising:

a second transmitter sending a second information block, the second information block being used for determining a second resource configuration, and the second resource configuration being used for determining at least one resource; sending target signaling, the target signaling being used for scheduling a target signal on a first cell; and sending a first information block, the first information block being used for determining a first resource configuration, and the first resource configuration being used for determining at least one resource; and
a second receiver receiving the target signal in a target time domain resource, or forgoing receiving the target signal in a target time domain resource,
wherein the target time domain resource depends on the second resource configuration, whether the target signal is forgone being received in the target time domain resource or not depends on whether a first condition is met or not, when the first condition is met, the target signal is forgone being received in the target time domain resource, and the first condition comprises: the target time domain resource and the at least one resource determined by the first resource configuration overlap in time domain.

9. The second node according to claim 8, wherein whether the target signal is forgone being received in the target time domain resource or not depends on whether one condition in a first condition set is met or not, the first condition set comprising a plurality of conditions, and the first condition being one condition in the first condition set; and when there is one condition in the first condition set being met, the target signal is forgone being received in the target time domain resource.

10. The second node according to claim 8 or 9, wherein both the first resource configuration and the second resource configuration are associated with the first cell.

11. The second node according to any one of claims 8 to 10, wherein
the at least one resource determined by the first resource configuration comprises at least one SSB resource, and the at least one resource determined by the second resource configuration comprises at least one SSB resource.

12. The second node according to claim 11, wherein

the at least one SSB resource determined by the first resource configuration is on the first cell, and the at least one SSB resource determined by the second resource configuration is on a second cell; and the first cell is different from the second cell; or
the at least one SSB resource determined by the first resource configuration is on the second cell, and the at least one SSB resource determined by the second resource configuration is on the first cell; and the first cell is different from the second cell.

13. The second node according to claim 11 or 12, wherein
a first PCI is used for generating a PSS and an SSS in the at least one SSB resource determined by the first resource configuration, a second PCI is used for generating a PSS and an SSS in the at least one SSB resource determined by the first resource configuration, and the first PCI is different from the second PCI.

14. The second node according to any one of claims 8 to 13, wherein

the target time domain resource depending on the second resource configuration comprises: the target time domain resource is composed of a target available slot group, the target available slot group comprises at least one available slot, and the target available slot group depends on the second resource configuration; or
the target time domain resource depending on the second resource configuration comprises: the target signaling is used for indicating a reference symbol set, the target time domain resource comprises at least one symbol in the reference symbol set that does not belong to a target invalid symbol group, and the target invalid symbol group depends on the second resource configuration.

15. A method for a first node used for wireless communication, comprising:

receiving a second information block, the second information block being used for determining a second resource configuration, and the second resource configuration being used for determining at least one resource; receiving target signaling, the target signaling being used for scheduling a target signal on a first cell; receiving a first information block, the first information block being used for determining a first resource configuration, and the first resource configuration being used for determining at least one resource; and

sending the target signal in a target time domain resource, or forgoing sending the target signal in a target time domain resource,

wherein the target time domain resource depends on the second resource configuration, whether the target signal is forgone being sent in the target time domain resource or not depends on whether a first condition is met or not, when the first condition is met, the target signal is forgone being sent in the target time domain resource, and the first condition comprises: the target time domain resource and the at least one resource determined by the first resource configuration overlap in time domain.

16. The method for a first node according to claim 15, wherein

whether the target signal is forgone being sent in the target time domain resource or not depends on whether one condition in a first condition set is met or not, the first condition set comprising a plurality of conditions, and the first condition being one condition in the first condition set; and when there is one condition in the first condition set being met, the target signal is forgone being sent in the target time domain resource.

17. The method for a first node according to claim 15 or 16, wherein

both the first resource configuration and the second resource configuration are associated with the first cell.

18. The method for a first node according to any one of claims 15 to 17, wherein

the at least one resource determined by the first resource configuration comprises at least one SSB resource, and the at least one resource determined by the second resource configuration comprises at least one SSB resource.

19. The method for a first node according to claim 18, wherein

the at least one SSB resource determined by the first resource configuration is on the first cell, and the at least one SSB resource determined by the second resource configuration is on a second cell; and the first cell is different from the second cell; or

the at least one SSB resource determined by the first resource configuration is on the second cell, and the at least one SSB resource determined by the second resource configuration is on the first cell; and the first cell is different from the second cell.

20. The method for a first node according to claim 18 or 19, wherein

a first PCI is used for generating a PSS and an SSS in the at least one SSB resource determined by the first resource configuration, a second PCI is used for generating a PSS and an SSS in the at least one SSB resource determined by the first resource configuration, and the first PCI is different from the second PCI.

21. The method for a first node according to any one of claims 15 to 20, wherein

the target time domain resource depending on the second resource configuration comprises: the target time domain resource is composed of a target available slot group, the target available slot group comprises at least one available slot, and the target available slot group depends on the second resource configuration; or

the target time domain resource depending on the second resource configuration comprises: the target signaling is used for indicating a reference symbol set, the target time domain resource comprises at least one symbol in the reference symbol set that does not belong to a target invalid symbol group, and the target invalid symbol group depends on the second resource configuration.

22. A method for a second node used for wireless communication, comprising:

sending a second information block, the second information block being used for determining a second resource configuration, and the second resource configuration being used for determining at least one resource; sending target signaling, the target signaling being used for scheduling a target signal on a first cell; and sending a first information block, the first information block being used for determining a first resource configuration, and the first resource configuration being used for determining at least one resource; and

receiving the target signal in a target time domain resource, or forgoing receiving the target signal in the target time domain resource,

wherein the target time domain resource depends on the second resource configuration, whether the target signal is forgone being received in the target time domain resource or not depends on whether a first condition is met or not, when the first condition is met, the target signal is forgone being received in the target time domain resource, and the first condition comprises: the target time domain resource and the at least one resource determined by the first resource configuration overlap in time domain.

23. The method for a second node according to claim 22, wherein
whether the target signal is forgone being received in the target time domain resource or not depends on whether one condition in a first condition set is met or not, the first condition set comprising a plurality of conditions, and the first condition being one condition in the first condition set; and when there is one condition in the first condition set being met, the target signal is forgone being received in the target time domain resource.

24. The method for a second node according to claim 22 or 23, wherein
both the first resource configuration and the second resource configuration are associated with the first cell.

25. The method for a second node according to any one of claims 22 to 24, wherein
the at least one resource determined by the first resource configuration comprises at least one SSB resource, and the at least one resource determined by the second resource configuration comprises at least one SSB resource.

26. The method for a second node according to claim 25, wherein

the at least one SSB resource determined by the first resource configuration is on the first cell, and the at least one SSB resource determined by the second resource configuration is on a second cell; and the first cell is different from the second cell; or
the at least one SSB resource determined by the first resource configuration is on the second cell, and the at least one SSB resource determined by the second resource configuration is on the first cell; and the first cell is different from the second cell.

27. The method for a second node according to claim 25 or 26, wherein
a first PCI is used for generating a PSS and an SSS in the at least one SSB resource determined by the first resource configuration, a second PCI is used for generating a PSS and an SSS in the at least one SSB resource determined by the first resource configuration, and the first PCI is different from the second PCI.

28. The method for a second node according to any one of claims 22 to 27, wherein

the target time domain resource depending on the second resource configuration comprises: the target time domain resource is composed of a target available slot group, the target available slot group comprises at least one available slot, and the target available slot group depends on the second resource configuration; or
the target time domain resource depending on the second resource configuration comprises: the target signaling is used for indicating a reference symbol set, the target time domain resource comprises at least one symbol in the reference symbol set that does not belong to a target invalid symbol group, and the target invalid symbol group depends on the second resource configuration.

FIG. 1

FIG. 2

FIG. 3

FIG. 4

N02. Second node | U01. First node

S21. Send a second information block

Second
information
block

S11. Receive the second information block

S22. Send target signaling

Target
signaling

S12. Receive the target signaling

S23. Send a first information block

First
information
block

S13. Receive the first information block

S14. Send a target signal

F51. Optional

Target
signal

S24. Receive the target signal

End | End

FIG. 5

Whether a target signal is forgone being
sent in a target time domain resource or not

Depends on

Whether one condition in a first condition set
is met or not

The first condition set comprises a plurality of conditions, and a first condition is one condition in
the first condition set

FIG. 6

Both a first resource configuration and
a second resource configuration

are associated with

A first cell

FIG. 7

At least one resource determined by
a first resource configuration

Comprises

At least one SSB resource

The at least one resource determined by
a second resource configuration

Comprises

At least one SSB resource

FIG. 8

At least one SSB resource determined by a first resource configuration ──── Is ────▶ On a first cell

At least one SSB resource determined by a second resource configuration ──── Is ────▶ On a second cell

FIG. 9A

At least one SSB resource determined by a first resource configuration ──── Is ────▶ On a second cell

At least one SSB resource determined by a second resource configuration ──── Is ────▶ On a first cell

FIG. 9B

A first PCI ──── Is used for generating ────▶ A PSS and an SSS in at least one SSB resource determined by a first resource configuration

Second PCI ──── Is used for generating ────▶ A PSS and an SSS in at least one SSB resource determined by a first resource configuration

FIG. 10

The meaning of "a target time domain resource depends on a second resource configuration" ──── Comprises ────▶ A target time domain resource is composed of a target available slot group, the target available slot group comprises at least one available slot, and the target available slot group depends on the second resource configuration

FIG. 11A

34

The meaning of "a target time domain resource depends on a second resource configuration" —— Comprises ——▶ Target signaling is used for indicating a reference symbol set, the target time domain resource comprises at least one symbol in the reference symbol set that does not belong to a target invalid symbol group, and the target invalid symbol group depends on the second resource configuration

FIG. 11B

1200

First receiver
1201

First node

First transmitter
1202

FIG. 12

1300

Second transmitter
1301

Second node

Second receiver
1302

FIG. 13

## INTERNATIONAL SEARCH REPORT

| International application No. |
| --- |
| **PCT/CN2024/079774** |

| A. CLASSIFICATION OF SUBJECT MATTER |
| --- |
| H04W72/231(2023.01)i |
| According to International Patent Classification (IPC) or to both national classification and IPC |

| B. FIELDS SEARCHED |
| --- |
| Minimum documentation searched (classification system followed by classification symbols) |
| IPC: H04W |

Documentation searched other than minimum documentation to the extent that such documents are included in the fields searched

Electronic data base consulted during the international search (name of data base and, where practicable, search terms used)

CNTXT: CNABS; CNKI; VEN; WOTXT; USTXT; EPTXT; 3GPP: 时域, 重叠, 交叠, 重合, 子集, 放弃, 发送, 接收, time domain, overlap, drop, transmit, send, receive

| C. | DOCUMENTS CONSIDERED TO BE RELEVANT | |
| --- | --- | --- |
| Category* | Citation of document, with indication, where appropriate, of the relevant passages | Relevant to claim No. |
| X | CN 114158091 A (SHANGHAI LANGBO COMMUNICATION TECHNOLOGY CO., LTD.) 08 March 2022 (2022-03-08) claims 1-10, and description, paragraphs [0077]-[0366] and [0393]-[0666] | 1-28 |
| X | CN 113747587 A (SHANGHAI LANGBO COMMUNICATION TECHNOLOGY CO., LTD.) 03 December 2021 (2021-12-03) claims 1-10, and description, paragraphs [0085]-[0432] | 1-28 |
| A | WO 2021029402 A1 (SHARP K. K.) 18 February 2021 (2021-02-18) entire document | 1-28 |
| A | CN 114554613 A (SHANGHAI LANGBO COMMUNICATION TECHNOLOGY CO., LTD.) 27 May 2022 (2022-05-27) entire document | 1-28 |
| A | CN 114793150 A (SHANGHAI TUILUO COMMUNICATION TECHNOLOGY PARTNERSHIP (LIMITED PARTNERSHIP)) 26 July 2022 (2022-07-26) entire document | 1-28 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 May 2024** | **14 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
| --- |
| **PCT/CN2024/079774** |

| Patent document cited in search report | | | Publication date (day/month/year) | Patent family member(s) | | | Publication date (day/month/year) |
| --- | --- | --- | --- | --- | --- | --- | --- |
| CN | 114158091 | A | 08 March 2022 | US | 2022078816 | A1 | 10 March 2022 |
| CN | 113747587 | A | 03 December 2021 | | None | | |
| WO | 2021029402 | A1 | 18 February 2021 | JP | 2021029010 | A | 25 February 2021 |
| CN | 114554613 | A | 27 May 2022 | US | 2022166577 | A1 | 26 May 2022 |
| CN | 114793150 | A | 26 July 2022 | WO | 2022161233 | A1 | 04 August 2022 |

Form PCT/ISA/210 (patent family annex) (July 2022)